# EUROPEAN PATENT SPECIFICATION

(11) **EP 2 846 453 B1**
(45) Date of publication and mention of the grant of the patent: **29.08.2018**
(21) Application number: 14735451.8
(22) Date of filing: 12.02.2014
(51) Int. Cl.: H02M 7/487, H02M 7/483

(54) **SINGLE-PHASE INVERTER AND THREE-PHASE INVERTER**
EINPHASENWECHSELRICHTER UND DREIPHASENWECHSELRICHTER
ONDULEUR MONOPHASÉ ET ONDULEUR TRIPHASÉ

(30) Priority: 24.06.2013 CN 201310254333
(43) Date of publication of application: 11.03.2015
(73) Proprietor: Huawei Technologies Co., Ltd., Longgang District Shenzhen, Guangdong 518129 (CN)
(72) Inventor: HU, Yanshen, Shenzhen Guangdong 518129 (CN)
(74) Representative: Goddar, Heinz J.
(86) International application number: PCT/CN2014/071990
(87) International publication number: WO 2014/206092

(56) References cited:
- EP-A1- 2 525 484
- CN-A- 102 611 343
- CN-A- 102 624 266
- CN-A- 102 820 801
- CN-A- 102 882 406
- CN-A- 103 023 363
- CN-A- 103 354 427
- CN-B- 103 023 363
- DE-A1-102007 026 393
- DE-U1-202010 012 993
- JP-A- 2012 253 981
- US-A1- 2010 084 922
- ZIYA OZKAN ET AL: "A survey and extension of high efficiency grid connected transformerless solar inverters with focus on leakage current characteristics", ENERGY CONVERSION CONGRESS AND EXPOSITION (ECCE), 2012 IEEE, IEEE, 15 September 2012 (2012-09-15), pages 3453-3460, XP032467149, DOI: 10.1109/ECCE.2012.6342322 ISBN: 978-1-4673-0802-1
- THIAGO B SOEIRO ET AL: "Novel 3-level Hybrid Neutral-Point-Clamped Converter", IECON 2011 - 37TH ANNUAL CONFERENCE ON IEEE INDUSTRIAL ELECTRONICS SOCIETY, IEEE, 7 November 2011 (2011-11-07), pages 4457-4462, XP032105165, DOI: 10.1109/IECON.2011.6120042 ISBN: 978-1-61284-969-0

## Description

### TECHNICAL FIELD

The present invention relates to the field of power electronic technologies, and in particular, to a single-phase inverter and a three-phase inverter.

### BACKGROUND

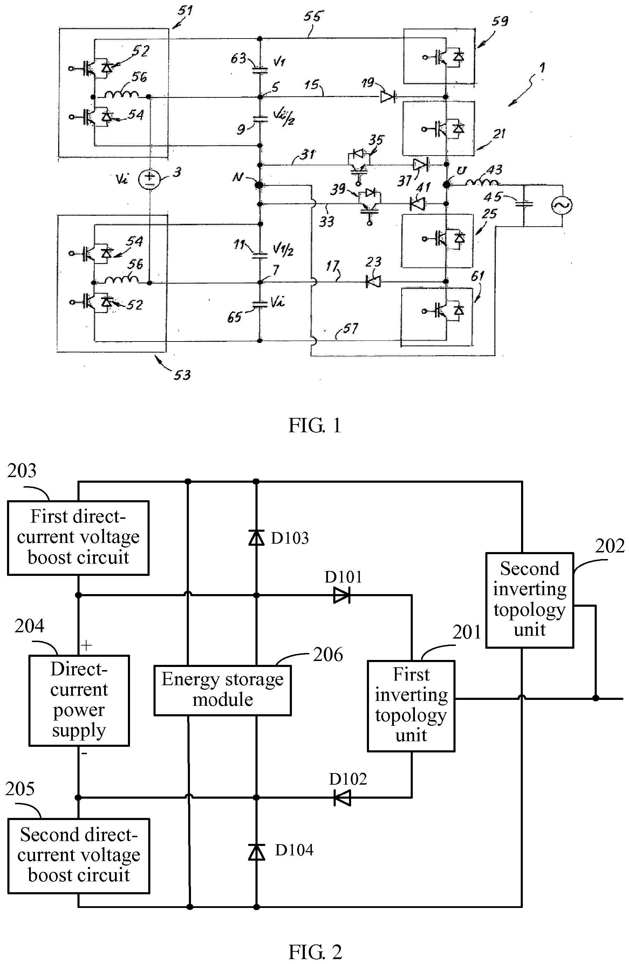

After converting a direct-current voltage output by a direct-current power supply into an alternating-current voltage, an inverter outputs the alternating-current voltage to a load circuit. An existing inverter has two different working modes according to high and low direct-current voltages output by a direct-current power supply. A five-level single-phase inverter shown in FIG. 1 is used as an example. When a direct-current power supply 3 outputs a low voltage, a direct-current voltage Boost circuit 51 or Boost circuit 53 works, where the five-level inverter is in a five-level working mode. When the direct-current power supply 3 outputs a high voltage, neither of the direct-current voltage Boost circuit 51 and Boost circuit 53 works, where in this case, the five-level inverter is in a three-level working mode. When the five-level inverter is in the three-level working mode, the five-level inverter can output three levels: "+1", "0", and "-1". When only a switching transistor 21 works in a high-frequency switching state, the five-level inverter outputs the level "+1"; when only a switching transistor 35 and a switching transistor 39 work in a low-frequency switching state, the five-level inverter outputs the level "0"; and when only a switching transistor 25 works in a high-frequency switching state, the five-level inverter outputs the level "-1". As can be seen, when the five-level inverter is in the three-level working mode, and outputs the level "+1", the high voltage output by the direct-current power supply 3 is output to the switching transistor 21 through a bus 15. In this case, a current flowing through the switching transistor 21 is relatively large. According to a calculation formula of a conduction loss P: , where I is a current flowing through a switching transistor, and R is an on resistance of the switching transistor, it can be seen that, in this case, a conduction loss of the switching transistor 21 is very large. Similarly, when the five-level inverter is in the three-level working mode, and outputs the level "-1", a conduction loss of the switching transistor 25 is very large. When a conduction loss of a switching transistor is large, a heat loss of the inverter is also large, which reduces the working efficiency of the inverter.

CN103023363 discloses a five-level inverter, comprising: a positive Boost boost circuit, negative Boost boost circuit and the inverter circuit; an inverter circuit comprising: a pair of input branch, a pair of positive freewheeling branch road, a pair of vertical leg inverter positive input branch; seventh switch connected across the positive input branch, is the freewheeling branch and the positive input of the inverter vertical leg slip between any two branches; the first Eight switch connected across the negative input branch, negative freewheeling branch vertical arm to the negative input of the inverter between any two branch branches; and the seventh switch connected across the two branches at least one branch Road and eighth switch spanned two branches in any one branch does not belong to the same branch, the same as the input branch to branch, freewheeling branch and an inverter bridge arm vertical input branch any couple.

Ziya Ozkan et al. "A survey and extension of high efficiency grid connected transformerless solar inverters with focus on leakage current characteristics", Engergy Conversion Congress and Exposition (ECCE), IEEE, September 15, 2012, pp. 3453-3460 discloses the increasing energy congestion and cost within the last decade in the world and the decreasing photovoltaic (PV) system prices increased the feasibility of grid connected PV systems due to their benefits. Among the constituents of these systems, PV inverter has the key role of determining the main system attributes. Among the vast range of commercial products, microinverter based sub kW single-phase units, Large scale solar farm type 100KW-1MW (and higher typically by paralleling) rated units (as central/multi-string inverters), and finally the kW range single/three-phase units (as string/multi-string/central inverters) constitute the majority of applications. Of these, the kW range units have dominated the field largely, due to the strong demand both in residential and commercial applications.

### SUMMARY

Embodiments of the present invention provide a single-phase inverter and a three-phase inverter, which can reduce a conduction loss of a switching transistor when a direct-current power supply outputs a high voltage, thereby reducing a heat loss of the inverter, to improve the working efficiency of the inverter.

On that account, technical solutions to resolving the technical problem according to the embodiments of the present invention are:
According to a first aspect, as set forth in claim 1, an embodiment of the present invention provides a single-phase inverter, where the inverter includes: a first inverting topology unit, a second inverting topology unit, a first direct-current voltage boost circuit, a second direct-current voltage boost circuit, a first diode, a second diode, a third diode, and a fourth diode;
a positive output end of a direct-current power supply and an input end of the first direct-current voltage boost circuit are connected to an anode of the third diode;
a negative output end of the direct-current power supply and an input end of the second direct-current voltage boost circuit are connected to a cathode of the fourth diode;
the first inverting topology unit is connected between the positive output end of the direct-current power supply and the negative output end of the direct-current power supply;
an output end of the first direct-current voltage boost circuit is connected to a cathode of the third diode;
an output end of the second direct-current voltage boost circuit is connected to an anode of the fourth diode;
the second inverting topology unit is connected between the cathode of the third diode and the anode of the fourth diode;
an energy storage module performs energy storage according to output voltages of the direct-current power supply, the first direct-current voltage boost circuit, and the second direct-current voltage boost circuit;
the first inverting topology unit and the second inverting topology unit are both formed by an even number of switching transistors; and
a middle point of the first inverting topology unit is connected to a middle point of the second inverting topology unit, and serves as an alternating-current output end of the inverter; and the first diode is further serially connected on a connection circuit between the middle point of the first inverting topology unit and the positive output end of the direct-current power supply, where the first diode makes a current flow from the positive output end of the direct-current power supply to the middle point of the first inverting topology unit; and the second diode is further serially connected on a connection circuit between the middle point of the first inverting topology unit and the negative output end of the direct-current power supply, where the second diode makes a current flow from the middle point of the first inverting topology unit to the negative output end of the direct-current power supply.

According to the first aspect, the energy storage module includes: a first energy storage unit, a second energy storage unit, a third energy storage unit, and a fourth energy storage unit, where:
a first end of the first energy storage unit is connected to the positive output end of the direct-current power supply;
a first end of the second energy storage unit is connected to the negative output end of the direct-current power supply;
a first end of the third energy storage unit is connected to the output end of the first direct-current voltage boost circuit;
a first end of the fourth energy storage unit is connected to the output end of the second direct-current voltage boost circuit; and
a second end of the first energy storage unit, a second end of the second energy storage unit, and a second end of the third energy storage unit are connected to a second end of the fourth energy storage unit.

According to the first aspect, in a second possible implementation manner of the first aspect, if the first inverting topology unit has a free-wheeling branch, the free-wheeling branch of the first inverting topology unit is connected to the second end of the first energy storage unit, and the second end of the first energy storage unit is grounded or an alternating-current load is connected between the alternating-current output end and the second end of the first energy storage unit;
if the second inverting topology unit has a free-wheeling branch, the free-wheeling branch of the second inverting topology unit is connected to the second end of the first energy storage unit, and the second end of the first energy storage unit is grounded or an alternating-current load is connected between the alternating-current output end and the second end of the first energy storage unit; and
if neither the first inverting topology unit nor the second inverting topology unit has a free-wheeling branch, the second end of the first energy storage unit is grounded, wherein the first inverting topology unit is a T-type three-level inverting topology unit, and the second inverting topology unit is a T-type three-level inverting topology unit, wherein: the two T-type inverting topology units work in a parallel structure; and each T-type three-level inverting topology unit comprises two switching transistors that are serially connected and have a same conducting direction, and a second free-wheeling branch, the second free-wheeling branch comprises two switching transistors with opposite conducting directions, and the second free-wheeling branch is connected at a middle point of the two serially-connected switching transistors of each T-type three-level inverting topology unit. With reference to a preferred embodiment, in a first possible implementation manner of the first aspect, the first inverting topology unit is a T-type three-level inverting topology unit, and includes a first switching transistor and a second switching transistor that are serially connected and have a same conducting direction, and the second free-wheeling branch, where: the second free-wheeling branch includes a seventh switching transistor and an eighth switching transistor that are serially connected and have opposite conducting directions; the first switching transistor and the first diode are serially connected on a first branch, the second switching transistor and the second diode are serially connected on a second branch, a first end of the first branch is connected to the positive output end of the direct-current power supply, a second end of the first branch is connected to a first end of the second branch, and a second end of the second branch is connected to the negative output end of the direct-current power supply; a conducting direction of the first switching transistor and the first diode makes a current flow from the first end of the first branch to the second end, and a conducting direction of the second switching transistor and the second diode makes a current flow from the first end of the second branch to the second end; a series circuit formed by the seventh switching transistor and the eighth switching transistor is connected between a common node of the first energy storage unit and the second energy storage unit and the second end of the first branch; and the second end of the first branch is an alternating-current output end; and the second inverting topology unit is a T-type three-level inverting topology unit, and includes a ninth switching transistor and a tenth switching transistor that are serially connected and have a same conducting direction, and a third free-wheeling branch, where: the third free-wheeling branch includes an eleventh switching transistor and a twelfth switching transistor that are serially connected and have opposite conducting directions; and the eleventh switching transistor and the twelfth switching transistor are serially connected between the common node of the first energy storage unit and the second energy storage unit, and a common node of the ninth switching transistor and the tenth switching transistor, a conducting direction of the eleventh switching transistor makes a current flow from the common node of the first energy storage unit and the second energy storage unit to the common node of the ninth switching transistor and the tenth switching transistor, and a conducting direction of the twelfth switching transistor makes a current flow from the common node of the ninth switching transistor and the tenth switching transistor to the common node of the first energy storage unit and the second energy storage unit.

With reference to the first possible implementation manner of the first aspect, in a second possible implementation manner of the first aspect, the inverter has a first working mode and a second working mode; and in the first working mode, neither the first direct-current voltage boost circuit nor the second direct-current voltage boost circuit works, and the inverter works in a first modality, a second modality, a third modality, or a fourth modality, where: when the inverter works in the first modality, only the first switching transistor and the ninth switching transistor of the inverter are in a working state; when the inverter works in the second modality, only the seventh switching transistor and the eleventh switching transistor of the inverter are in a working state; when the inverter works in the third modality, only the second switching transistor and the tenth switching transistor of the inverter are in a working state; and when the inverter works in the fourth modality, only the eighth switching transistor and the twelfth switching transistor of the inverter are in a working state.

With reference to the second possible implementation manner of the first aspect, in a third possible implementation manner of the first aspect, when the inverter is in the second working mode, the inverter works in the first modality, the second modality, the third modality, the fourth modality, a fifth modality, or a sixth modality, where: when the inverter works in the first modality, only the first direct-current voltage boost circuit and the ninth switching transistor of the inverter are in a working state; when the inverter works in the second modality, only the first switching transistor of the inverter is in a working state; when the inverter works in the third modality, only the seventh switching transistor and the eleventh switching transistor of the inverter are in a working state; when the inverter is in the fourth modality, only the second direct-current voltage boost circuit and the tenth switching transistor of the inverter are in a working state; when the inverter is in the fifth modality, only the second switching transistor of the inverter is in a working state; and when the inverter is in the sixth modality, only the eighth switching transistor and the twelfth switching transistor of the inverter are in a working state. Another preferred embodiment of the present invention provides a three-phase inverter, where the three-phase inverter includes three single-phase inverters of a same structure, and each single-phase inverter is the single-phase inverter according to the first aspect or any one of the first to the twentieth possible implementation manners of the first aspect; and an alternating-current output end of each single-phase inverter serves as a three-phase alternating-current output end of the three-phase inverter.

Compared with the prior art, in the embodiments of the present invention, a bridge arm formed by the first diode, the first inverting topology unit, and the second diode and a bridge arm formed by the third diode, the second inverting topology unit, and the fourth diode are connected in parallel at two ends of the direct-current power supply. Therefore, when the direct-current power supply outputs a high voltage, neither the first direct-current voltage boosting circuit nor the second direct-current voltage boost circuit works, the first inverting topology unit and the second inverting topology unit work in a parallel structure, and the parallel structure decreases a current flowing through a switching transistor of each inverting topology unit. According to a calculation formula of a conduction loss P: , where I is a current flowing through a switching transistor, and R is an on resistance of the switching transistor, it can be seen that, a conduction loss of the switching transistor is reduced by decreasing the current flowing through the switching transistor. Meanwhile, reduction in the conduction loss of the switching transistor decreases a heat loss of the inverter, thereby further improving the working efficiency of the inverter.

### BRIEF DESCRIPTION OF DRAWINGS

FIG. 1 shows a five-level inverter in the prior art;
FIG. 2 is a schematic structural diagram of a single-phase inverter according to Embodiment 1 of the present invention;
FIG. 3 is a schematic structural diagram of a two-level inverting topology unit;
FIG. 4 is a schematic structural diagram of an I-type three-level inverting topology unit;
FIG. 5 is a schematic structural diagram of a T-type three-level inverting topology unit;
FIG. 6 is a specific circuit diagram of a single-phase inverter according to Embodiment 2 of the present invention;
FIG. 7 is a specific circuit diagram of a single-phase inverter according to Embodiment 3 of the present invention;
FIG. 8 is a specific circuit diagram of a single-phase inverter according to Embodiment 4 of the present invention;
FIG. 9 is a specific circuit diagram of a single-phase inverter according to Embodiment 5 of the present invention; and
FIG. 10 is a specific circuit diagram of a single-phase inverter according to Embodiment 6 of the present invention.

### DESCRIPTION OF EMBODIMENTS

FIG. 1 shows an existing five-level single-phase inverter. When a direct-current power supply 3 outputs a low voltage, a direct-current voltage Boost circuit 51 or Boost circuit 53 works, where the five-level inverter is in a five-level working mode. When the direct-current power supply 3 outputs a high voltage, neither of the direct-current voltage Boost circuit 51 and Boost circuit 53 works, where in this case, the five-level inverter is in a three-level working mode. When the five-level inverter is in the five-level working mode, the five-level inverter can output five levels: "+2", "+1", "0", "-1", and "-2". When only the direct-current voltage Boost circuit 51 works, a switching transistor 59 works in a high-frequency switching state, and a switching transistor 21 works in a low-frequency switching state, the five-level inverter outputs the level "+2"; when only the switching transistor 21 works in a high-frequency switching state, the five-level inverter outputs the level "+1"; when only a switching transistor 35 and a switching transistor 39 work in a low-frequency switching state, the five-level inverter outputs the level "0"; when only a switching transistor 25 works in a high-frequency switching state, the five-level inverter outputs the level "-1"; and when only the direct-current voltage Boost circuit 53 works, a switching transistor 61 works in a high-frequency switching state, and the switching transistor 25 works in a low-frequency switching state, the five-level inverter outputs the level "-2". When the five-level inverter is in the three-level working mode, the five-level inverter can output three levels: "+1", "0", and "-1". When only the switching transistor 21 works in a high-frequency switching state, the five-level inverter outputs the level "+1"; when only the switching transistor 35 and the switching transistor 39 work in a low-frequency switching state, the five-level inverter outputs the level "0"; and when only the switching transistor 25 works in a high-frequency switching state, the five-level inverter outputs the level "-1". As can be seen, when the five-level inverter is in the three-level working mode, and outputs the level "+1", the high voltage output by the direct-current power supply 3 is output to the switching transistor 21 through a bus 15. In this case, a current flowing through the switching transistor 21 is high. According to a calculation formula of a conduction loss *P: P* = *I²*×*R*, where *I* is a current flowing through a switching transistor, and *R* is an on resistance of the switching transistor, it can be seen that, in this case, a conduction loss of the switching transistor 21 is very large. Similarly, when the five-level inverter is in the three-level working mode, and outputs the level "-1", a conduction loss of the switching transistor 25 is very large. When a conduction loss of a switching transistor is large, a heat loss of the inverter is also large, which reduces the working efficiency of the inverter.

However, in embodiments of the present invention, a single-phase inverter and a three-phase inverter are provided, which can reduce a conduction loss of a switching transistor when a direct-current power supply outputs a high voltage (that is, when a direct-current voltage boost circuit does not work, or in other words, the inverter is in a working mode with fewer levels), thereby reducing a heat loss of the inverter and further improving the working efficiency of the inverter.

To make the objectives, features, and advantages of the present invention more comprehensible, the following describes in detail the embodiments of the present invention with reference to the accompanying drawings.

### Embodiment 1

Referring to FIG. 2, the present invention provides Embodiment 1 of a single-phase inverter. In this embodiment, the inverter includes: a first inverting topology unit 201, a second inverting topology unit 202, a first direct-current voltage boost circuit 203, a second direct-current voltage boost circuit 205, a first diode D101, a second diode D102, a third diode D103, and a fourth diode D104. The first inverting topology unit and the second inverting topology unit may both be of any existing inverter topology structure formed by an even number of switching transistors, for example, a three-level inverting topology unit or a five-level inverting topology unit. The first direct-current voltage boost circuit or the second direct-current voltage boost circuit may be any DC/DC converter with a direct-current voltage boosting function, for example, the first direct-current voltage boost circuit or the second direct-current voltage boost circuit may be a Boost circuit, a Buck circuit, or the like.

A positive output end of a direct-current power supply 204 and an input end of the first direct-current voltage boost circuit 203 are connected to an anode of the third diode D103.

A negative output end of the direct-current power supply 204 and an input end of the second direct-current voltage boost circuit 205 are connected to a cathode of the fourth diode D104.

The first inverting topology unit 201 is connected between the positive output end of the direct-current power supply 204 and the negative output end of the direct-current power supply 204. An output end of the first direct-current voltage boost circuit 203 is connected to a cathode of the third diode D103.

An output end of the second direct-current voltage boost circuit 205 is connected to an anode of the fourth diode D104.

The second inverting topology unit 202 is connected between the cathode of the third diode D103 and the anode of the fourth diode D104.

An energy storage module 206 performs energy storage according to output voltages of the direct-current power supply 204, the first direct-current voltage boost circuit 203, and the second direct-current voltage boost circuit 205.

The first inverting topology unit 201 and the second inverting topology unit 202 are both formed by an even number of switching transistors. A switching transistor refers to a power switching transistor, which may be an MOSFET (Metal-Oxide-Semiconductor Field-Effect Transistor, metal-oxide-semiconductor field-Effect transistor), an IGBT (Insulated Gate Bipolar Transistor, insulated gate bipolar transistor), or the like. Each switching transistor is connected in parallel to a backward diode.

A middle point of the first inverting topology unit 201 is connected to a middle point of the second inverting topology unit 202, and serves as an alternating-current output end of the inverter, and the alternating-current output end may be connected to an alternating-current load; the first diode D101 is further serially connected on a connection circuit between the middle point of the first inverting topology unit 201 and the positive output end of the direct-current power supply, where the first diode D101 makes a current flow from the positive output end of the direct-current power supply 204 to the middle point of the first inverting topology unit 201; and the second diode D102 is further serially connected on a connection circuit between the middle point of the first inverting topology unit 201 and the negative output end of the direct-current power supply 204, where the second diode D102 makes a current flow from the middle point of the first inverting topology unit 201 to the negative output end of the direct-current power supply 204. That is, in this embodiment, it may be as shown in FIG. 2 that, an anode of the first diode D101 is connected to the positive output end of the direct-current power supply 204, the first inverting topology unit is connected between a cathode of the first diode D101 and an anode of the second diode D102, and a cathode of the second diode D102 is connected to the negative output end of the direct-current power supply; and it may also be, not as shown in FIG. 2, that the first diode D101 or the second diode D102 is serially connected between the switching transistors in the first inverting topology unit as long as the middle point of the first inverting topology unit 201 when connected to neither the first diode D101 nor the second diode D102 serves as an alternating-current output end, then the first diode D101 is serially connected on a connection circuit between the positive output end of the direct-current power supply 204 and the middle point of the first inverting topology unit 201, and the second diode D102 is serially connected between the middle point of the first inverting topology unit 201 and the negative output end of the direct-current power supply 204. The first diode D101 has the anode on a side close to the direct-current power supply 204, and the cathode on a side close to the middle point of the first inverting topology unit 201, and the second diode D102 has the anode on a side close to the middle point of the first inverting topology unit 201, and the cathode on a side close to the direct-current power supply 204.

In this embodiment, the inverter may have two different working modes. When the direct-current power supply 204 outputs a high voltage, the inverter is in a first working mode, and in this case, neither the first direct-current voltage boost circuit 203 nor the second direct-current voltage boost circuit 205 works, and the first inverting topology unit 201 and the second inverting topology unit 202 work in a parallel mode. When the direct-current power supply 204 outputs a low voltage, the inverter is in a second working mode, and in this case, the first direct-current voltage boost circuit 203 and the second direct-current voltage boost circuit 205 work.

As can be seen from the technical solution, compared with the prior art, in this embodiment, a bridge arm formed by the first diode D101, the first inverting topology unit 201, and the second diode D102 and a bridge arm formed by the third diode D103, the second inverting topology unit 202, and the fourth diode D104 are connected in parallel at two ends of the direct-current power supply 204. Therefore, when the direct-current power supply outputs a high voltage, neither the first direct-current voltage boosting circuit 203 nor the second direct-current voltage boost circuit 205 works, the first inverting topology unit 201 and the second inverting topology unit 202 work in a parallel structure, and the parallel structure decreases a current flowing through a switching transistor of each inverting topology unit. According to a calculation formula of a conduction loss *P: P* = *I²*×*R*, where *I* is a current flowing through a switching transistor, and *R* is an on resistance of the switching transistor, it can be seen that, in this embodiment, a conduction loss of the switching transistor is reduced by decreasing the current flowing through the switching transistor. Meanwhile, reduction in the conduction loss of the switching transistor decreases a heat loss of the inverter, thereby further improving the working efficiency of the inverter.

Moreover, in the embodiment of the present invention, when the direct-current power supply outputs a low voltage, that is, when the first direct-current voltage boost circuit or the second direct-current voltage boost circuit works, the first inverting topology unit and the second inverting topology unit may work in different modes, and in this case, a use time of a switching transistor can be reduced, so that the service life of the switching transistor is prolonged. This is because, when the inverter in FIG. 1 is in the five-level working mode, when the level "+2" is output, the switching transistor 59 works in a high-frequency switching state, and the switching transistor 21 works in a low-frequency switching state, and when the level "+1" is output, the switching transistor 21 works in a high-frequency switching state, and therefore, the switching transistor 21 is in a working state all the time when a positive level is output. However, in this embodiment, when a positive level is output, the first inverting topology unit and the second inverting topology unit may be used to output different levels respectively. Therefore, it avoids that the switching transistor remains in a working state all the time, which reduces a use time of the switching transistor and prolongs the service life of the switching transistor. Similarly, when the inverter outputs a negative level, the use time of the switching transistor can also be reduced.

In this embodiment, the energy storage module 206 may include a first energy storage unit, a second energy storage unit, a third energy storage unit, and a fourth energy storage unit. A first end of the first energy storage unit is connected to the positive output end of the direct-current power supply 204. A first end of the second energy storage unit is connected to the negative output end of the direct-current power supply 204. A first end of the third energy storage unit is connected to the output end of the first direct-current voltage boost circuit 203. A first end of the fourth energy storage unit is connected to the output end of the second direct-current voltage boost circuit 205. A second end of the first energy storage unit, a second end of the second energy storage unit, and a second end of the third energy storage unit are connected to a second end of the fourth energy storage unit. Certainly, the energy storage units may also have another composition form, as long as energy storage can be performed for the output voltages of the direct-current power supply, the first direct-current voltage boost circuit, and the second direct-current voltage boost circuit, which is not limited in the present invention.

Moreover, the first energy storage unit, the second energy storage unit, the third energy storage unit, and the fourth energy storage unit may all be formed by at least one capacitor. In addition, the third energy storage unit may be formed by a capacitor connected in parallel at two ends of the third diode D103 and the first energy storage unit, that is, a capacitor may be connected in parallel between the anode and cathode of the third diode D103, and the capacitor and the first energy storage unit together form the third energy storage unit. Likewise, the fourth energy storage unit may also be formed by a capacitor connected in parallel at two ends of the fourth diode D104 and the second energy storage unit.

In this embodiment, the alternating-current output end of the inverter may be connected to an alternating-current load. During specific connection, it may be that the second end of the first energy storage unit is grounded, the alternating-current output end is connected to one end of the alternating-current load, and the other end of the alternating-current load is grounded; or it may be that the alternating-current output end and the second end of the first energy storage unit are connected to two ends of the alternating-current load respectively.

In the first inverting topology unit or the second inverting topology unit, a free-wheeling branch or no free-wheeling branch may exist. The free-wheeling branch refers to a free-wheeling circuit that makes the inverter output a zero level. The following describes manners for connection of the alternating-current output end when the first inverting topology unit and second inverting topology unit have a free-wheeling branch and have no free-wheeling branch. In the following description, a case in which the energy storage module includes the first energy storage unit, the second energy storage unit, the third energy storage unit, and the fourth energy storage unit is used as an example. If the first inverting topology unit has a free-wheeling branch, the free-wheeling branch of the first inverting topology unit is connected to the second end of the first energy storage unit. In this case, it may be that the second end of the first energy storage unit is grounded, and the alternating-current output end is connected to the alternating-current load; or it may be that the alternating-current load is connected between the alternating-current output end and the second end of the first energy storage unit. It should be noted that, in this case, the second inverting topology unit may have a free-wheeling branch, or may have no free-wheeling branch, which is not limited in the present invention.

If the second inverting topology unit has a free-wheeling branch, the free-wheeling branch of the second inverting topology unit is connected to the second end of the first energy storage unit. In this case, it may be that the second end of the first energy storage unit is grounded, and the alternating-current output end is connected to the alternating-current load; or it may be that the alternating-current load is connected between the alternating-current output end and the second end of the first energy storage unit. It should be noted that, in this case, the first inverting topology unit may have a free-wheeling branch, or may have no free-wheeling branch, which is not limited in the present invention.

If neither the first inverting topology unit nor the second inverting topology unit has a free-wheeling branch, the second end of the first energy storage unit is grounded, and the alternating-current output end is connected to the alternating-current load.

The first inverting topology unit and the second inverting topology unit may both be of any existing inverter topology structure formed by an even number of switching transistors, and preferably, neither the first inverting topology unit nor the second inverting topology unit has a direct-current voltage boost circuit. In the embodiments of the present invention, five specific embodiments of the five-level inverter are provided. In the five specific embodiments, when the first inverting topology unit is a two-level inverting topology unit, the second inverting topology unit is an I-type three-level inverting topology unit; when the first inverting topology unit is a T-type three-level inverting topology unit, the second inverting topology unit is an I-type three-level inverting topology unit or a T-type three-level inverting topology unit; and when the first inverting topology unit is an I-type three-level inverting topology unit, the second inverting topology unit is a two-level inverting topology unit or a T-type three-level inverting topology unit.

First, structures of the three inverting topology units, namely the two-level inverting topology unit, the I-type three-level inverting topology unit, and the T-type three-level inverting topology unit, are specifically described.

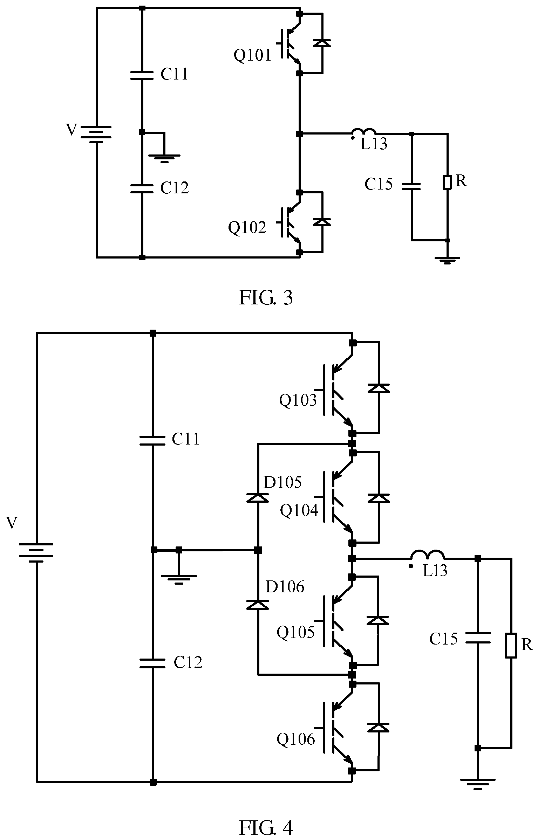

As shown in FIG. 3, the two-level inverting topology unit includes two switching transistors, that is, a first switching transistor Q101 and a second switching transistor Q102, that are serially connected and have a same conducting direction. In FIG. 3, the first switching transistor Q101 and the second switching transistor Q102 are connected in parallel at two ends of a direct-current power supply V, a series circuit formed by a first capacitor C11 and a second capacitor C12 is further connected in parallel at the two ends of the direct-current power supply V, and a common node of the first capacitor C11 and the second capacitor C12 is grounded. A common node of the first switching transistor Q101 and the second switching transistor Q102 is an alternating-current output end, and is connected to one end of an inductor L13, and the other end of the inductor L13 is grounded through a capacitor C15 and a load resistor R that are connected in parallel.

As shown in FIG. 4, the I-type three-level inverting topology unit includes four switching transistors that are serially connected and have a same conducting direction, and a first free-wheeling branch. The four switching transistors with the same conducting direction specifically are a third switching transistor Q103, a fourth switching transistor Q104, a fifth switching transistor Q105, and a sixth switching transistor Q106. The first free-wheeling branch includes two serially-connected diodes, that is, a fifth diode D105 and a sixth diode D106, and the first free-wheeling branch is connected in parallel at two ends of a series circuit formed by two switching transistors in the middle of the I-type three-level inverting topology unit, that is, a series circuit formed by the fifth diode D105 and the sixth diode D106 is connected in parallel at two ends of a series circuit formed by the fourth switching transistor Q104 and the fifth switching transistor Q105. Moreover, a conducting direction of the two diodes in the first free-wheeling branch is opposite to the conducting direction of the two switching transistors in the middle of the I-type three-level inverting topology unit. In FIG. 4, the I-type three-level inverting topology unit is connected in parallel at two ends of a direct-current power supply V, a series circuit formed by a first capacitor C11 and a second capacitor C12 is further connected in parallel at the two ends of the direct-current power supply V, and a common node of the first capacitor C11 and the second capacitor C12 is connected to a middle point of the first free-wheeling branch, that is, a common node of the fifth diode D105 and the sixth diode D106, and the common node is grounded. A common node of the fourth switching transistor Q104 and the fifth switching transistor Q105 is an alternating-current output end, and is connected to one end of an inductor L13, and the other end of the inductor L13 is grounded through a capacitor C15 and a load resistor R that are connected in parallel.

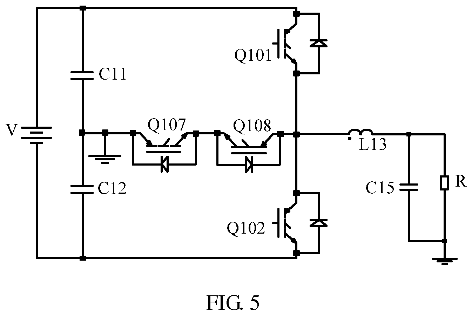

As shown in FIG. 5, the T-type three-level inverting topology unit includes two switching transistors that are serially connected and have a same conducting direction, and a second free-wheeling branch. The two switching transistors that are serially connected and have a same conducting direction specifically are a first switching transistor Q101 and a second switching transistor Q102. The second free-wheeling branch includes two switching transistors, that is, a seventh switching transistor Q107 and an eighth switching transistor Q108, with opposite conducting directions, and the second free-wheeling branch is connected to a middle point of the two serially-connected switching transistors of the T-type three-level inverting topology unit, that is, a middle point of the first switching transistor Q101 and the second switching transistor Q102. In FIG. 5, a series circuit formed by the first switching transistor Q101 and the second switching transistor Q102 is connected in parallel at two ends of a direct-current power supply V, a series circuit formed by a first capacitor C11 and a second capacitor C12 is further connected in parallel at the two ends of the direct-current power supply V, and a common node of the first capacitor C11 and the second capacitor C12 is connected to the second free-wheeling branch. Actually, the second free-wheeling branch is serially connected between the common node of the first capacitor C11 and the second capacitor C12, and a common node of the first switching transistor Q101 and the second switching transistor Q102, and the common node of the first capacitor C11 and the second capacitor C12 is grounded. The common node of the first switching transistor Q101 and the second switching transistor Q102 is an alternating-current output end, and is connected to one end of an inductor L13, and the other end of the inductor L13 is grounded through a capacitor C15 and a load resistor R that are connected in parallel.

In FIG. 3 to FIG. 5, the number of direct-current power supplies is not limited. For example, it may be that only one direct-current power supply exists, which is connected in parallel at two ends of an inverting topology unit, as shown in FIG. 3 to FIG. 5; or it may be that two direct-current power supplies exist, the two direct-current power supply are serially connected and then connected in parallel at two ends of an inverting topology unit, and in this case, a common node of the two direct-current power supply is connected to the common node of the first capacitor C11 and the second capacitor C12.

The following describes the five specific embodiments of the five-level single-phase inverter provided in the embodiments of the present invention. In the five specific embodiments, when the first inverting topology unit is a two-level inverting topology unit, the second inverting topology unit is an I-type three-level inverting topology unit; when the first inverting topology unit is a T-type three-level inverting topology unit, the second inverting topology unit is an I-type three-level inverting topology unit or a T-type three-level inverting topology unit; and when the first inverting topology unit is an I-type three-level inverting topology unit, the second inverting topology unit is a two-level inverting topology unit or a T-type three-level inverting topology unit.

First, a specific structure of the five-level single-phase inverter where the first inverting topology unit is a two-level inverting topology unit, and the second inverting topology unit is an I-type three-level inverting topology unit is introduced by using an embodiment.

### Embodiment 2

In this embodiment, a case in which the first direct-current voltage boost circuit and the second direct-current voltage boost circuit are both boost circuits, the first energy storage unit is a first capacitor C11, the second energy storage unit is a second capacitor C12, the third energy storage unit is a third capacitor C13, and the fourth energy storage unit is a fourth capacitor C14 is used as an example for description. Actually, neither constitution nor structures of the first direct-current voltage boost circuit, the second direct-current voltage boost circuit, the first energy storage unit, the second energy storage unit, the third energy storage unit, and the fourth energy storage unit are not limited in the embodiment of the present invention.

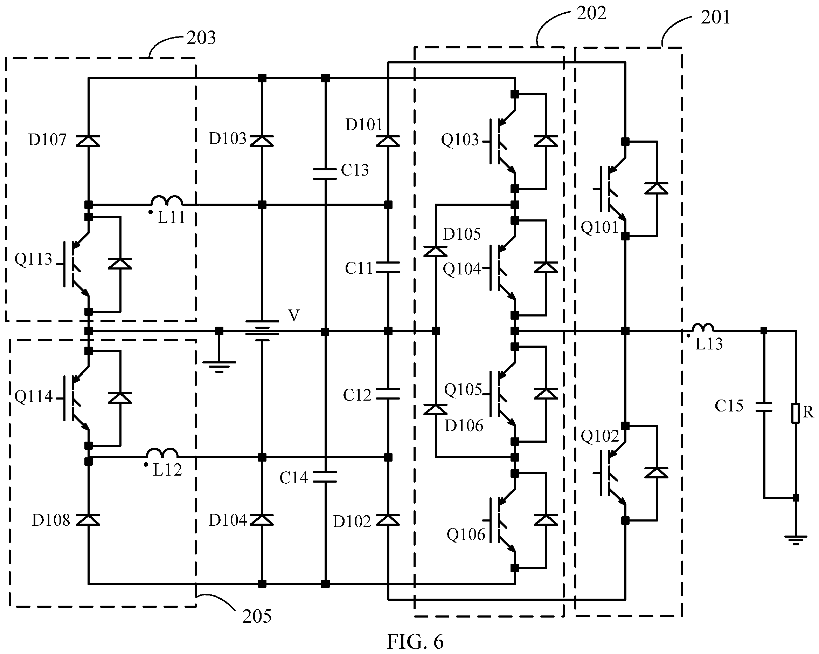

Referring to FIG. 6, the present invention provides Embodiment 2 of a single-phase inverter. In this embodiment, the inverter includes: a first inverting topology unit 201, a second inverting topology unit 202, a first direct-current voltage boost circuit 203, a second direct-current voltage boost circuit 205, a first diode D101, a second diode D102, a third diode D103, and a fourth diode D104. The first direct-current voltage boost circuit 203 includes a first inductor L11, a seventh diode D107, and a thirteenth switching transistor Q113, and the second direct-current voltage boost circuit 205 includes a second inductor L12, an eighth diode D108, and a fourteenth switching transistor Q114. A positive output end of a direct-current power supply V, a first end of the first inductor L11, and a first end of the first capacitor C11 are connected to an anode of the third diode D103. A negative output end of the direct-current power supply V, a first end of the second inductor L12, and a first end of the second capacitor C12 are connected to a cathode of the fourth diode D104.

A second end of the first inductor L11 is connected to an anode of the seventh diode D107, a second end of the second inductor L12 is connected to a cathode of the eighth diode D108, and a series circuit formed by the thirteenth switching transistor Q113 and the fourteenth switching transistor Q114 is further connected between the second end of the first inductor L11 and the second end of the second inductor L12. Specifically, the thirteenth switching transistor Q113 is connected to the first inductor, and the fourteenth switching transistor Q114 is connected to the second inductor. A common node of the thirteenth switching transistor Q113 and the fourteenth switching transistor Q114 is grounded; and a conducting direction of the thirteenth switching transistor Q113 makes a current flow from the second end of the first inductor L11 to the common node of the thirteenth switching transistor Q113 and the fourteenth switching transistor Q114, and a conducting direction of the fourteenth switching transistor Q114 makes a current flow from the common node of the thirteenth switching transistor Q113 and the fourteenth switching transistor Q114 to the second end of the second inductor L12.

A cathode of the seventh diode D107 and a first end of the third capacitor C13 are connected to a cathode of the third diode D103. An anode of the eighth diode D108 and a first end of the fourth capacitor C14 are connected to an anode of the fourth diode D104.

A second end of the first capacitor C11, a second end of the second capacitor C12, and a second end of the third capacitor C13 are connected to a second end of the fourth capacitor C14, and the second end of the first capacitor C11 is connected to the common node of the thirteenth switching transistor Q113 and the fourteenth switching transistor Q114.

The first inverting topology unit 201 is a two-level inverting topology unit, and includes a first switching transistor Q101 and a second switching transistor Q102 that are serially connected and have a same conducting direction, the first switching transistor Q101 and the first diode D101 are serially connected on a first branch, the second switching transistor Q102 and the second diode D102 are serially connected on a second branch, a first end of the first branch is connected to the positive output end of the direct-current power supply V, a second end of the first branch is connected to a first end of the second branch, and a second end of the second branch is connected to the negative output end of the direct-current power supply V. A conducting direction of the first switching transistor Q101 and the first diode D101 makes a current flow from the first end of the first branch to the second end, and a conducting direction of the second switching transistor Q102 and the second diode D102 makes a current flow from the first end of the second branch to the second end.

It should be noted that, in this embodiment, the first branch includes the first diode D101 and the first switching transistor Q101 that are serially connected, and a position relationship between the first diode D101 and the first switching transistor Q101 may be that shown in FIG. 6, that is, an anode of the first diode D101 is connected to the positive output end of the direct-current power supply V, and a cathode of the first diode D101 is connected to the first switching transistor Q101; and positions of the first diode D101 and the first switching transistor Q101 in FIG. 6 may also be exchanged, and in this case, the first switching transistor Q101 is connected between the positive output end of the direct-current power supply V and the anode of the first diode D101. Likewise, the second branch includes the second diode D102 and the second switching transistor Q102 that are serially connected, and a position relationship between the second diode D102 and the second switching transistor Q102 may be that shown in FIG. 6, that is, a cathode of the second diode D102 is connected to the negative output end of the direct-current power supply V, and an anode of the second diode D102 is connected to the second switching transistor Q102; and positions of the second diode D102 and the second switching transistor Q102 in FIG. 6 may also be exchanged, and in this case, the second switching transistor Q102 is connected between the anode of the second diode D102 and the negative output end of the direct-current power supply V.

The second inverting topology unit 202 is an I-type three-level inverting topology unit, and includes a third switching transistor Q103, a fourth switching transistor Q104, a fifth switching transistor Q105, and a sixth switching transistor Q106 that are serially connected and have a same conducting direction, and a first free-wheeling branch. The first free-wheeling branch includes a fifth diode D105 and a sixth diode D106. The third switching transistor Q103, the fourth switching transistor Q104, the fifth switching transistor Q105, and the sixth switching transistor Q106 are sequentially serially connected between the cathode of the third diode D103 and the anode of the fourth diode D104, and the conducting direction of the third switching transistor Q103, the fourth switching transistor Q104, the fifth switching transistor Q105, and the sixth switching transistor Q106 makes a current flow from the third diode D103 to the fourth diode D104. An anode of the fifth diode D105 and a cathode of the sixth diode D106 are connected to the second end of the first capacitor C11, a cathode of the fifth diode D105 is connected between the third switching transistor Q103 and the fourth switching transistor Q104, and an anode of the sixth diode D106 is connected between the fifth switching transistor Q105 and the sixth switching transistor Q106.

A common node of the fourth switching transistor Q104 and the fifth switching transistor Q105 is connected to the second end of the first branch, and serves as an alternating-current output end of the inverter in this embodiment.

In this embodiment, the second end of the first capacitor C11 is grounded, and the alternating-current output end is connected to an alternating-current load, for example, the alternating-current output end may be, as shown in FIG. 6, connected to the inductor L13, the inductor L13 is serially connected to a load resistor R, and a capacitor C15 is connected in parallel at two ends of the load resistor R. In another embodiment, the second end of the first capacitor C11 may not be grounded, and an alternating-current load is connected between the alternating-current output end and the second end of the first capacitor C11.

As can be seen from the technical solution, compared with the prior art, in the embodiment of the present invention, a bridge arm formed by the first diode D101, the two-level inverting topology unit, and the second diode D102 and a bridge arm formed by the third diode D103, the I-type three-level inverting topology unit, and the fourth diode D104 are connected in parallel at two ends of the direct-current power supply V. Therefore, when the direct-current power supply outputs a high voltage, neither the thirteenth switching transistor Q113 nor the fourteenth switching transistor Q114 works, the two-level inverting topology unit and the I-type three-level inverting topology unit work in a parallel structure, and the parallel structure decreases a current flowing through a switching transistor of each inverting topology unit. According to a calculation formula of a conduction loss *P*: *P* = *I²*×*R*, where *I* is a current flowing through a switching transistor, and *R* is an on resistance of the switching transistor, it can be seen that, in this embodiment, a conduction loss of the switching transistor is reduced by decreasing the current flowing through the switching transistor. Meanwhile, reduction in the conduction loss of the switching transistor decreases a heat loss of the inverter, thereby further improving the working efficiency of the inverter.

The single-phase inverter shown in FIG. 6 is a five-level inverter. The following introduces working modes of the inverter.

The inverter has two different working modes, that is, a first working mode and a second working mode. When the direct-current power supply outputs a high voltage, the inverter works in the first working mode, and in this case, the inverter is in a three-level working mode, and can output three levels: "+1", "0", and "-1". When the direct-current power supply outputs a low voltage, the inverter works in the second working mode, and in this case, the inverter is in a five-level working mode, and can output five levels: "+2", "+1", "0", "-1", and "-2". The following specifically describes the two working modes separately.

In the first working mode, neither the first direct-current voltage boost circuit nor the second direct-current voltage boost circuit works, that is, neither the thirteenth switching transistor Q113 nor the fourteenth switching transistor Q114 works, and the inverter works in a first modality, a second modality, a third modality, or a fourth modality.

Specifically, when the inverter works in the first modality, in the inverter, only the first switching transistor Q101, the third switching transistor Q103, and the fourth switching transistor Q104 are in a working state, while none of the second switching transistor Q102, the fifth switching transistor Q105, the sixth switching transistor Q106, the thirteenth switching transistor Q113, and the fourteenth switching transistor Q114 works. In this case, a bus voltage output by the positive output end of the direct-current power supply V is applied to a parallel circuit formed by the first switching transistor Q101, the third switching transistor Q103, and the fourth switching transistor Q104. Therefore, compared with the current flowing through the switching transistor 21 in the five-level inverter shown in FIG. 1, a current flowing through each switching transistor in the first switching transistor Q101, the third switching transistor Q103, and the fourth switching transistor Q104 in the inverter in this embodiment is decreased, so that the conduction loss is smaller. In this case, the inverter outputs the level "+1".

When the inverter is in the first modality, in two circuits working in parallel, one of them has only one switching transistor, the first switching transistor Q101, and the other one has the third switching transistor Q103 and the fourth switching transistor Q104. Therefore, a voltage drop applied to the first switching transistor Q101 is larger. In this case, to reduce workload of the first switching transistor Q101, the third switching transistor Q103 and the fourth switching transistor Q104 may enter a working state before the first switching transistor Q101. In this way, the third switching transistor Q103 and the fourth switching transistor Q104 are turned on first, which controls a voltage drop at two ends of the parallel circuit, thereby limiting a voltage at two ends of the first switching transistor Q101, and reducing a switching loss of the first switching transistor Q101.

Herein, it should be noted that, that a switching transistor is in a working state may specifically be that the switching transistor performs switching at a certain frequency or is turned on all the time. In the first mode, a preferred solution is that, the first switching transistor Q101 performs switching at a first frequency, the third switching transistor Q103 performs switching at a second frequency, and the fourth switching transistor Q104 performs switching at a third frequency, where the first frequency is greater than the third frequency, and the second frequency is greater than the third frequency. The first frequency and the second frequency may be high frequencies, and the third frequency may be a low frequency. Specifically, in the present invention, a high frequency may be a frequency greater than or equal to 1 kHz, and a low frequency may be a frequency less than 1 kHz, for example, a frequency of 50 Hz of an alternating-current power grid.

When the inverter works in the second modality, only the fourth switching transistor Q104 of the inverter is in a working state, while none of the first switching transistor Q101, the second switching transistor Q102, the third switching transistor Q103, the fifth switching transistor Q105, the sixth switching transistor Q106, the thirteenth switching transistor Q113, and the fourteenth switching transistor Q114 works. The fifth diode D105 in the first free-wheeling branch and the fourth switching transistor Q104 form a free-wheeling path. In this case, the inverter outputs the level "0". A preferred solution is that, the fourth switching transistor performs switching at the third frequency.

When the inverter works in the third modality, in the inverter, only the second switching transistor Q102, the fifth switching transistor Q105, and the sixth switching transistor Q106 are in a working state, while none of the first switching transistor Q101, the third switching transistor Q103, the fourth switching transistor Q104, the thirteenth switching transistor Q113, and the fourteenth switching transistor Q114 works. In this case, a bus voltage output by the negative output end of the direct-current power supply V is applied to a parallel circuit formed by the second switching transistor Q102, the fifth switching transistor Q105, and the sixth switching transistor Q106. Therefore, compared with the current flowing through the switching transistor 25 in the five-level inverter shown in FIG. 1, a current flowing through each switching transistor in the second switching transistor Q102, the fifth switching transistor Q105, and the sixth switching transistor Q106 in the inverter in this embodiment is decreased, so that the conduction loss is smaller. In this case, the inverter outputs the level "-1". A preferred solution is that, the second switching transistor Q102 performs switching at the first frequency, the sixth switching transistor Q106 performs switching at the second frequency, and the fifth switching transistor Q105 performs switching at the third frequency, where the first frequency is greater than the third frequency, and the second frequency is greater than the third frequency. The first frequency and the second frequency may be high frequencies, and the third frequency may be a low frequency.

When the inverter is in the third modality, in two circuits working in parallel, one of them has only the second switching transistor Q102, and the other one has the fifth switching transistor Q105 and the sixth switching transistor Q106. Therefore, a voltage drop applied to the second switching transistor Q102 is larger. In this case, to reduce workload of the second switching transistor Q102, the fifth switching transistor Q105 and the sixth switching transistor Q106 may enter a working state before the second switching transistor Q102. In this way, the fifth switching transistor Q105 and the sixth switching transistor Q106 are turned on first, which controls a voltage drop at two ends of the parallel circuit, thereby limiting a voltage at two ends of the second switching transistor Q102, and reducing a switching loss of the second switching transistor Q102.

When the inverter works in the fourth modality, only the fifth switching transistor Q105 of the inverter is in a working state, while none of the first switching transistor Q101, the second switching transistor Q102, the third switching transistor Q103, the fourth switching transistor Q104, the sixth switching transistor Q106, the thirteenth switching transistor Q113, and the fourteenth switching transistor Q114 works. The sixth diode D106 in the first free-wheeling branch and the fifth switching transistor Q105 form a free-wheeling path. In this case, the inverter outputs the level "0". A preferred solution is that, the fifth switching transistor performs switching at the third frequency.

The inverter may output a three-level alternating-current voltage by working in the four modalities. For example, a case in which the inverter outputs an alternating-current sine wave is used as an example, where in a process of outputting one cycle of sine wave, the inverter sequentially works in the first modality, the second modality, the third modality, and the fourth modality, the inverter outputs a positive half-cycle sine wave when working in the first modality, outputs a zero level when working in the second modality, outputs a negative half-cycle sine wave when working in the third modality, and outputs a zero level when working in the fourth modality.

The following introduces the second working mode of the inverter in this embodiment, that is, a five-level working mode when the direct-current power supply outputs a low level. It should be noted that, the second working mode introduced in the following is a preferred manner when the inverter in this embodiment works in the second working mode.

In the second working mode, the inverter works in the first modality, the second modality, the third modality, the fourth modality, a fifth modality, or a sixth modality.

Specifically, when the inverter works in the first modality, in the inverter, only the third switching transistor Q103, the fourth switching transistor Q104, and the thirteenth switching transistor Q113 are in a working state, while none of the first switching transistor Q101, the second switching transistor Q102, the fifth switching transistor Q105, the sixth switching transistor Q106, and the fourteenth switching transistor Q114 works. In this case, after boosting the voltage of the direct-current power supply, a bus voltage output by the seventh diode D107 is applied to a series circuit formed by the third switching transistor Q103 and the fourth switching transistor Q104. In this case, the inverter outputs the level "+2".

In the first mode, a preferred solution is that, the third switching transistor Q103 performs switching at the second frequency, the fourth switching transistor Q104 performs switching at the third frequency, and the thirteenth switching transistor Q113 performs switching at a fourth frequency, where the second frequency is greater than the third frequency, and the fourth frequency is greater than the third frequency. The fourth frequency may be a high frequency.

When the inverter works in the second modality, because the direct-current power supply outputs a low voltage in this case, in the inverter, it may be that only the first switching transistor Q101 is in a working state, while none of the second switching transistor Q102, the third switching transistor Q103, the fourth switching transistor Q104, the fifth switching transistor Q105, the sixth switching transistor Q106, the thirteenth switching transistor Q113, and the fourteenth switching transistor Q114 works. In this case, a bus voltage output by the positive output end of the direct-current power supply V is applied to the first switching transistor Q101. In this case, the inverter outputs the level "+1". A preferred solution is that, the first switching transistor Q101 performs switching at the first frequency. The inverter in this embodiment outputs the level "+2" in the first modality through the third switching transistor and the fourth switching transistor, and outputs the level "+1" in the second modality through the first switching transistor. Compared with that the switching transistor 21 in FIG. 1 performs switching all the time when the level "+2" or "+1" is output, the fourth switching transistor Q104 of the inverter in this embodiment has a shorter working time, and therefore has a longer service life.

To reduce a conduction loss of a switching transistor, when the inverter works in the second modality, it may also be that only the first switching transistor Q101, the third switching transistor Q103, and the fourth switching transistor Q104 are in a working state, while none of the second switching transistor Q102, the fifth switching transistor Q105, the sixth switching transistor Q106, the thirteenth switching transistor Q113, and the fourteenth switching transistor Q114 works. In this case, a bus voltage output by the positive output end of the direct-current power supply V is applied to a parallel circuit formed by the first switching transistor Q101, the third switching transistor Q103, and the fourth switching transistor Q104. Therefore, compared with the current flowing through the switching transistor 21 in the five-level inverter shown in FIG. 1, a current flowing through each switching transistor in the first switching transistor Q101, the third switching transistor Q103, and the fourth switching transistor Q104 in the inverter in this embodiment is decreased, so that the conduction loss is smaller. In this case, the inverter outputs the level "+1". A preferred solution is that, the first switching transistor Q101 performs switching at the first frequency, the third switching transistor Q103 performs switching at the second frequency, and the fourth switching transistor Q104 performs switching at the third frequency, where the first frequency is greater than the third frequency, and the second frequency is greater than the third frequency. In this case, the third switching transistor Q103 and the fourth switching transistor Q104 may also be turned on before the first switching transistor Q101.

When the inverter works in the third modality, only the fourth switching transistor Q104 of the inverter is in a working state, while none of the first switching transistor Q101, the second switching transistor Q102, the third switching transistor Q103, the fifth switching transistor Q105, the sixth switching transistor Q106, the thirteenth switching transistor Q113, and the fourteenth switching transistor Q114 works. The fifth diode D105 in the first free-wheeling branch and the fourth switching transistor Q104 form a free-wheeling path. In this case, the inverter outputs the level "0". A preferred solution is that, the fourth switching transistor performs switching at the third frequency. In the inverter in this embodiment, in both the first modality and the third modality, the fourth switching transistor works at the third frequency, that is, a low frequency. However, the switching transistor 21 in FIG. 1 works in a low-frequency switching state when the level "+2" is output, and works in a high-frequency switching state when the level "+1" is output. Therefore, compared with the inverter in FIG. 1, the fourth switching transistor of the inverter in this embodiment does not need to be switched between high and low frequencies, and therefore has a lower switching loss.

When the inverter works in the fourth modality, in the inverter, only the fifth switching transistor Q105, the sixth switching transistor Q106, and the fourteenth switching transistor Q114 are in a working state, while none of the first switching transistor Q101, the second switching transistor Q102, the third switching transistor Q103, the fourth switching transistor Q104, and the thirteenth switching transistor Q113 works. In this case, after boosting the voltage of the direct-current power supply, a bus voltage output by the eighth diode D108 is applied to a series circuit formed by the fifth switching transistor Q105 and the sixth switching transistor Q106. In this case, the inverter outputs the level "-2".

In the fourth mode, a preferred solution is that, the sixth switching transistor Q106 performs switching at the second frequency, the fifth switching transistor Q105 performs switching at the third frequency, and the fourteenth switching transistor Q114 performs switching at the fourth frequency, where the second frequency is greater than the third frequency, and the fourth frequency is greater than the third frequency.

When the inverter works in the fifth modality, because the direct-current power supply outputs a low voltage in this case, in the inverter, it may be that only the second switching transistor Q102 is in a working state, while none of the first switching transistor Q101, the third switching transistor Q103, the fourth switching transistor Q104, the fifth switching transistor Q105, the sixth switching transistor Q106, the thirteenth switching transistor Q113, and the fourteenth switching transistor Q114 works. In this case, a bus voltage output by the negative output end of the direct-current power supply V is applied to the second switching transistor Q102. In this case, the inverter outputs the level "-1". A preferred solution is that, the second switching transistor Q102 performs switching at the first frequency. The inverter in this embodiment outputs the level "-2" in the fourth modality through the fifth switching transistor and the sixth switching transistor, and outputs the level "-1" in the fifth modality through the second switching transistor. Compared with that the switching transistor 25 in FIG. 1 performs switching all the time when the level "-2" or "-1" is output, the fifth switching transistor Q105 of the inverter in this embodiment has a shorter working time, and therefore has a longer service life.

To reduce a conduction loss of a switching transistor, when the inverter works in the fifth modality, it may also be that only the second switching transistor Q102, the fifth switching transistor Q105, and the sixth switching transistor Q106 are in a working state, while none of the first switching transistor Q101, the third switching transistor Q103, the fourth switching transistor Q104, the thirteenth switching transistor Q113, and the fourteenth switching transistor Q114 works. In this case, a bus voltage output by the negative output end of the direct-current power supply V is applied to a parallel circuit formed by the second switching transistor Q102, the fifth switching transistor Q105, and the sixth switching transistor Q106. Therefore, compared with the current flowing through the switching transistor 25 in the five-level inverter shown in FIG. 1, a current flowing through each switching transistor in the second switching transistor Q102, the fifth switching transistor Q105, and the sixth switching transistor Q106 in the inverter in this embodiment is decreased, so that the conduction loss is smaller. In this case, the inverter outputs the level "-1". A preferred solution is that, the second switching transistor Q102 performs switching at the first frequency, the sixth switching transistor Q106 performs switching at the second frequency, and the fifth switching transistor Q105 performs switching at the third frequency, where the first frequency is greater than the third frequency, and the second frequency is greater than the third frequency. In this case, the fifth switching transistor Q105 and the sixth switching transistor Q106 may also be turned on before the second switching transistor Q102.

When the inverter works in the sixth modality, only the fifth switching transistor Q105 of the inverter is in a working state, while none of the first switching transistor Q101, the second switching transistor Q102, the third switching transistor Q103, the fourth switching transistor Q104, the sixth switching transistor Q106, the thirteenth switching transistor Q113, and the fourteenth switching transistor Q114 works. The sixth diode D106 in the first free-wheeling branch and the fifth switching transistor Q105 form a free-wheeling path. In this case, the inverter outputs the level "0". A preferred solution is that, the fifth switching transistor performs switching at the third frequency. In the inverter in this embodiment, in both the fourth modality and the sixth modality, the fifth switching transistor works at the third frequency, that is, a low frequency. However, the switching transistor 25 in FIG. 1 works in a low-frequency switching state when the level "-2" is output, and works in a high-frequency switching state when the level "-1" is output. Therefore, compared with the inverter in FIG. 1, the fifth switching transistor of the inverter in this embodiment does not need to be switched between high and low frequencies, and therefore has a lower switching loss.

The inverter may output a five-level alternating-current voltage by working in the six modalities. For example, a case in which the inverter outputs an alternating-current sine wave is used as an example, where in a process of outputting one cycle of sine wave, the inverter sequentially works in the second modality, the first modality, the second modality, the third modality, the fifth modality, the fourth modality, the fifth modality, and the sixth modality, the inverter outputs a positive half-cycle sine wave when working in the second modality, the first modality, and the second modality, outputs a zero level when working in the third modality, outputs a negative half-cycle sine wave when working in the fifth modality, the fourth modality, and the fifth modality, and outputs a zero level when working in the sixth modality.

A specific structure where the first inverting topology unit is a T-type three-level inverting topology unit, and the second inverting topology unit is an I-type three-level inverting topology unit is described in the following by using an embodiment.

### Embodiment 3

In this embodiment, a case in which the first direct-current voltage boost circuit and the second direct-current voltage boost circuit are both Boost circuits, the first energy storage unit is a first capacitor C11, the second energy storage unit is a second capacitor C12, the third energy storage unit is a third capacitor C13, and the fourth energy storage unit is a fourth capacitor C14 is used as an example for description. Actually, neither constitution nor structures of the first direct-current voltage boost circuit, the second direct-current voltage boost circuit, the first energy storage unit, the second energy storage unit, the third energy storage unit, and the fourth energy storage unit are not limited in the embodiment of the present invention.

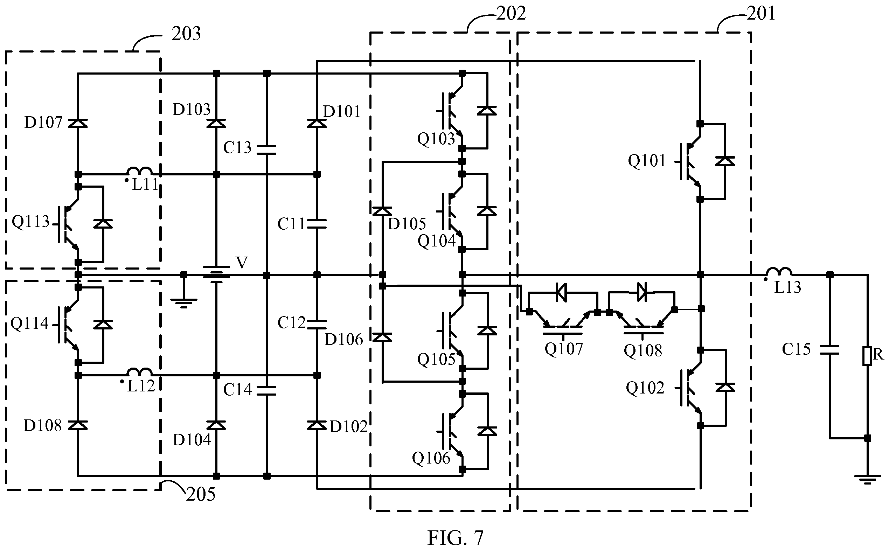

Referring to FIG. 7, the present invention provides Embodiment 3 of a single-phase inverter. In this embodiment, the inverter includes: a first inverting topology unit 201, a second inverting topology unit 202, a first direct-current voltage boost circuit 203, a second direct-current voltage boost circuit 205, a first diode D101, a second diode D102, a third diode D103, and a fourth diode D104. The first direct-current voltage boost circuit 203 includes a first inductor L11, a seventh diode D107, and a thirteenth switching transistor Q113, and the second direct-current voltage boost circuit 205 includes a second inductor L12, an eighth diode D108, and a fourteenth switching transistor Q114. It should be noted that, between specific structures of the inverter in this embodiment and the inverter in Embodiment 2, the only difference lies in that the seventh switching transistor Q107 and the eighth switching transistor Q108 are added. The following introduces the specific structure of the inverter in this embodiment:
A positive output end of a direct-current power supply V, a first end of the first inductor L11, and a first end of the first capacitor C11 are connected to an anode of the third diode D103. A negative output end of the direct-current power supply V, a first end of the second inductor L12, and a first end of the second capacitor C12 are connected to a cathode of the fourth diode D104.

A second end of the first inductor L11 is connected to an anode of the seventh diode D107, a second end of the second inductor L12 is connected to a cathode of the eighth diode D108, and a series circuit formed by the thirteenth switching transistor Q113 and the fourteenth switching transistor Q114 is further connected between the second end of the first inductor L11 and the second end of the second inductor L12. Specifically, the thirteenth switching transistor Q113 is connected to the first inductor, and the fourteenth switching transistor Q114 is connected to the second inductor. A common node of the thirteenth switching transistor Q113 and the fourteenth switching transistor Q114 is grounded; and a conducting direction of the thirteenth switching transistor Q113 makes a current flow from the second end of the first inductor L11 to the common node of the thirteenth switching transistor Q113 and the fourteenth switching transistor Q114, and a conducting direction of the fourteenth switching transistor Q114 makes a current flow from the common node of the thirteenth switching transistor Q113 and the fourteenth switching transistor Q114 to the second end of the second inductor L12.

A cathode of the seventh diode D107 and a first end of the third capacitor C13 are connected to a cathode of the third diode D103. An anode of the eighth diode D108 and a first end of the fourth capacitor C14 are connected to an anode of the fourth diode D104.

A second end of the first capacitor C11, a second end of the second capacitor C12, and a second end of the third capacitor C13 are connected to a second end of the fourth capacitor C14, and the second end of the first capacitor C11 is connected to the common node of the thirteenth switching transistor Q113 and the fourteenth switching transistor Q114.

The first inverting topology unit 201 is a T-type three-level inverting topology unit, and includes a first switching transistor Q101 and a second switching transistor Q102 that are serially connected and have a same conducting direction, and a second free-wheeling branch. The second free-wheeling branch includes a seventh switching transistor Q107 and an eighth switching transistor Q108 that are serially connected and have opposite conducting directions. The first switching transistor Q101 and the first diode D101 are serially connected on a first branch, the second switching transistor Q102 and the second diode D102 are serially connected on a second branch, a first end of the first branch is connected to the positive output end of the direct-current power supply V, a second end of the first branch is connected to a first end of the second branch, and a second end of the second branch is connected to the negative output end of the direct-current power supply V. A conducting direction of the first switching transistor Q101 and the first diode D101 makes a current flow from the first end of the first branch to the second end, and a conducting direction of the second switching transistor Q102 and the second diode D102 makes a current flow from the first end of the second branch to the second end.

It should be noted that, in this embodiment, the first branch includes the first diode D101 and the first switching transistor Q101 that are serially connected, and a position relationship between the first diode D101 and the first switching transistor Q101 may be that shown in FIG. 7, that is, an anode of the first diode D101 is connected to the positive output end of the direct-current power supply V, and a cathode of the first diode D101 is connected to the first switching transistor Q101; and positions of the first diode D101 and the first switching transistor Q101 in FIG. 7 may also be exchanged, and in this case, the first switching transistor Q101 is connected between the positive output end of the direct-current power supply V and the anode of the first diode D101. Likewise, the second branch includes the second diode D102 and the second switching transistor Q102 that are serially connected, and a position relationship between the second diode D102 and the second switching transistor Q102 may be that shown in FIG. 7, that is, a cathode of the second diode D102 is connected to the negative output end of the direct-current power supply V, and an anode of the second diode D102 is connected to the second switching transistor Q102; and positions of the second diode D102 and the second switching transistor Q102 in FIG. 7 may also be exchanged, and in this case, the second switching transistor Q102 is connected between the anode of the second diode D102 and the negative output end of the direct-current power supply V.

The second inverting topology unit 202 is an I-type three-level inverting topology unit, and includes a third switching transistor Q103, a fourth switching transistor Q104, a fifth switching transistor Q105, and a sixth switching transistor Q106 that are serially connected and have a same conducting direction, and a first free-wheeling branch. The first free-wheeling branch includes a fifth diode D105 and a sixth diode D106. The third switching transistor Q103, the fourth switching transistor Q104, the fifth switching transistor Q105, and the sixth switching transistor Q106 are sequentially serially connected between the cathode of the third diode D103 and the anode of the fourth diode D104, and the conducting direction of the third switching transistor Q103, the fourth switching transistor Q104, the fifth switching transistor Q105, and the sixth switching transistor Q106 makes a current flow from the third diode D103 to the fourth diode D104. An anode of the fifth diode D105 and a cathode of the sixth diode D106 are connected to the second end of the first capacitor C11, a cathode of the fifth diode D105 is connected between the third switching transistor Q103 and the fourth switching transistor Q104, and an anode of the sixth diode D106 is connected between the fifth switching transistor Q105 and the sixth switching transistor Q106.

A common node of the fourth switching transistor Q104 and the fifth switching transistor Q105 is connected to the second end of the first branch, and serves as an alternating-current output end of the inverter in this embodiment.

In this embodiment, the second end of the first capacitor C11 is grounded, and the alternating-current output end is connected to an alternating-current load, for example, as shown in FIG. 7, the alternating-current output end is connected to the inductor L13, the inductor L13 is serially connected to a load resistor R, and a capacitor C15 is connected in parallel at two ends of the load resistor R. In another embodiment, the second end of the first capacitor C11 may not be grounded, and an alternating-current load is connected between the alternating-current output end and the second end of the first capacitor C11.

Compared with Embodiment 2, in this embodiment, only the seventh switching transistor Q107 and the eighth switching transistor Q108 are added to a circuit structure, and other components and their connection manners are the same as those in Embodiment 2, that is, the circuit structure is the same as the circuit structure shown in FIG. 6. Therefore, the following description focuses on connection manners of the seventh switching transistor Q107 and the eighth switching transistor Q108.

A series circuit formed by the seventh switching transistor Q107 and the eighth switching transistor Q108 is connected between a common node of the first capacitor C11 and the second capacitor C12, and the second end of the first branch. It should be noted that, in this embodiment, a position relationship between the seventh switching transistor Q107 and the eighth switching transistor Q108 may be that shown in FIG. 7, that is, the seventh switching transistor Q107 is connected to the common node of the first capacitor C11 and the second capacitor C12, and the eighth switching transistor Q108 is connected to the second end of the first branch; and positions of the seventh switching transistor Q107 and the eighth switching transistor Q108 may also be exchanged. A conducting direction of the seventh switching transistor makes a current flow from the common node of the first capacitor C11 and the second capacitor C12 to the second end of the first branch, and a conducting direction of the eighth switching transistor makes a current flow from the second end of the first branch to the common node of the first capacitor C11 and the second capacitor C12. As can be seen from the technical solution, compared with the prior art, in the embodiment of the present invention, a bridge arm formed by the first diode D101, the T-type three-level inverting topology unit, and the second diode D102 and a bridge arm formed by the third diode D103, the I-type three-level inverting topology unit, and the fourth diode D104 are connected in parallel at two ends of the direct-current power supply V. Therefore, when the direct-current power supply outputs a high voltage, neither the thirteenth switching transistor Q113 nor the fourteenth switching transistor Q114 works, the T-type three-level inverting topology unit and the I-type three-level inverting topology unit work in a parallel structure, and the parallel structure decreases a current flowing through a switching transistor of each inverting topology unit. According to a calculation formula of a conduction loss *P: P* = *I²*×*R*, where *I* is a current flowing through a switching transistor, and *R* is an on resistance of the switching transistor, it can be seen that, in this embodiment, a conduction loss of the switching transistor is reduced by decreasing the current flowing through the switching transistor. Meanwhile, reduction in the conduction loss of the switching transistor decreases a heat loss of the inverter, thereby further improving the working efficiency of the inverter.

Meanwhile, compared with the prior art, the inverter in this embodiment has two parallel-connected free-wheeling branches. Therefore, when a zero level is output, a current flowing through each free-wheeling branch is smaller, so that the conduction loss of the switching transistor is also reduced when a zero level is output.

The single-phase inverter shown in FIG. 7 is a five-level inverter. The following introduces working modes of the inverter.

The inverter has two different working modes, that is, a first working mode and a second working mode. When the direct-current power supply outputs a high voltage, the inverter works in the first working mode, and in this case, the inverter is in a three-level working mode, and can output levels "+1", "0", and "-1". When the direct-current power supply outputs a low voltage, the inverter works in the second working mode, and in this case, the inverter is in a five-level working mode, and can output levels "+2", "+1", "0", "-1", and "-2". The following specifically describes the two working modes separately.

In the first working mode, neither the first direct-current voltage boost circuit nor the second direct-current voltage boost circuit works, that is, neither the thirteenth switching transistor Q113 nor the fourteenth switching transistor Q114 works, and the inverter works in a first modality, a second modality, a third modality, or a fourth modality. In the first modality and the third modality, working conditions of the inverter in this embodiment are the same as those of the inverter in Embodiment 2. Therefore, the first modality and the third modality are briefly described. For details, refer to related parts in Embodiment 2. Herein, description is focused on working conditions in the second modality and the fourth modality in this embodiment.

In the first working mode, neither the first direct-current voltage boost circuit nor the second direct-current voltage boost circuit works, that is, neither the thirteenth switching transistor Q113 nor the fourteenth switching transistor Q114 works, and the inverter works in the first modality, the second modality, the third modality, or the fourth modality.

Specifically, when the inverter works in the first modality, in the inverter, only the first switching transistor Q101, the third switching transistor Q103, and the fourth switching transistor Q104 are in a working state, while none of the second switching transistor Q102, the fifth switching transistor Q105, the sixth switching transistor Q106, the seventh switching transistor Q107, the eighth switching transistor Q108, the thirteenth switching transistor Q113, and the fourteenth switching transistor Q114 works. Compared with the current flowing through the switching transistor 21 in the five-level inverter shown in FIG. 1, a current flowing through each switching transistor in the first switching transistor Q101, the third switching transistor Q103, and the fourth switching transistor Q104 in the inverter in this embodiment is decreased, so that a conduction loss is smaller. In this case, the inverter outputs the level "+1". The third switching transistor Q103 and the fourth switching transistor Q104 may enter a working state before the first switching transistor Q101.

In the first mode, a preferred solution is that, the first switching transistor Q101 performs switching at a first frequency, the third switching transistor Q103 performs switching at a second frequency, and the fourth switching transistor Q104 performs switching at a third frequency.

When the inverter works in the second modality, only the fourth switching transistor Q104 and the seventh switching transistor Q107 of the inverter are in a working state, while none of the first switching transistor Q101, the second switching transistor Q102, the third switching transistor Q103, the fifth switching transistor Q105, the sixth switching transistor Q106, the eighth switching transistor Q108, the thirteenth switching transistor Q113, and the fourteenth switching transistor Q114 works. The fifth diode D105 in the first free-wheeling branch and the fourth switching transistor Q104 form a free-wheeling path, and the seventh switching transistor Q107 in the second free-wheeling branch and a diode that is connected in parallel to and has a direction opposite to that of the eighth switching transistor Q108 form a free-wheeling path, so that the inverter has two parallel-connected free-wheeling paths. In this case, the inverter outputs the level "0". A preferred solution is that, the fourth switching transistor and the seventh switching transistor both perform switching at the third frequency.

When the inverter works in the third modality, in the inverter, only the second switching transistor Q102, the fifth switching transistor Q105, the sixth switching transistor Q106 are in a working state, while none of the first switching transistor Q101, the third switching transistor Q103, the fourth switching transistor Q104, the seventh switching transistor Q107, the eighth switching transistor Q108, the thirteenth switching transistor Q113, and the fourteenth switching transistor Q114 works. Compared with the current flowing through the switching transistor 25 in the five-level inverter shown in FIG. 1, a current flowing through each switching transistor in the second switching transistor Q102, the fifth switching transistor Q105, and the sixth switching transistor Q106 in the inverter in this embodiment is decreased, so that a conduction loss is smaller. In this case, the inverter outputs the level "-1". The fifth switching transistor Q105 and the sixth switching transistor Q106 may enter a working state before the second switching transistor Q102.

In the third modality, a preferred solution is that, the second switching transistor Q102 performs switching at the first frequency, the sixth switching transistor Q106 performs switching at the second frequency, and the fifth switching transistor Q105 performs switching at the third frequency. When the inverter works in the fourth modality, only the fifth switching transistor Q105 and the eighth switching transistor Q108 of the inverter are in a working state, while none of the first switching transistor Q101, the second switching transistor Q102, the third switching transistor Q103, the fourth switching transistor Q104, the sixth switching transistor Q106, the seventh switching transistor Q107, the thirteenth switching transistor Q113, and the fourteenth switching transistor Q114 works. The sixth diode D106 in the first free-wheeling branch and the fifth switching transistor Q105 form a free-wheeling path, and a diode that is connected in parallel to and has a direction opposite to that of the seventh switching transistor Q107 in the second free-wheeling branch and the eighth switching transistor Q108 form a free-wheeling path, so that the inverter has two parallel-connected free-wheeling paths. In this case, the inverter outputs the level "0". A preferred solution is that, the fifth switching transistor and the eighth switching transistor both perform switching at the third frequency.

In the second working mode, the inverter works in the first modality, the second modality, the third modality, the fourth modality, a fifth modality, or a sixth modality. In the first modality, the second mode, the fourth mode, and the fifth modality, working conditions of the inverter in this embodiment are the same as those of the inverter shown in FIG. 6. Therefore, the first modality, the second mode, the fourth mode, and the fifth modality are briefly described. For details, refer to related parts in Embodiment 2. Herein, description is focused on working conditions in the third modality and the sixth modality in this embodiment.

Specifically, when the inverter works in the first modality, in the inverter, only the third switching transistor Q103, the fourth switching transistor Q104, and the thirteenth switching transistor Q113 are in a working state, while none of the first switching transistor Q101, the second switching transistor Q102, the fifth switching transistor Q105, the sixth switching transistor Q106, the seventh switching transistor Q107, the eighth switching transistor Q108, and the fourteenth switching transistor Q114 works. In this case, the inverter outputs the level "+2".

In the first mode, a preferred solution is that, the third switching transistor Q103 performs switching at the second frequency, the fourth switching transistor Q104 performs switching at the third frequency, and the thirteenth switching transistor Q113 performs switching at a fourth frequency. When the inverter works in the second modality, in the inverter, it may be that only the first switching transistor Q101 is in a working state, while none of the second switching transistor Q102, the third switching transistor Q103, the fourth switching transistor Q104, the fifth switching transistor Q105, the sixth switching transistor Q106, the seventh switching transistor Q107, the eighth switching transistor Q108, the thirteenth switching transistor Q113, and the fourteenth switching transistor Q114 works. In this case, the inverter outputs the level "+1". A preferred solution is that, the first switching transistor Q101 performs switching at the first frequency.

To reduce a conduction loss of a switching transistor, when the inverter works in the second modality, it may also be that only the first switching transistor Q101, the third switching transistor Q103, and the fourth switching transistor Q104 are in a working state, while none of the second switching transistor Q102, the fifth switching transistor Q105, the sixth switching transistor Q106, the seventh switching transistor Q107, the eighth switching transistor Q108, the thirteenth switching transistor Q113, and the fourteenth switching transistor Q114 works.

When the inverter works in the third modality, only the fourth switching transistor Q104 and the seventh switching transistor Q107 of the inverter are in a working state, while none of the first switching transistor Q101, the second switching transistor Q102, the third switching transistor Q103, the fifth switching transistor Q105, the sixth switching transistor Q106, the eighth switching transistor Q108, the thirteenth switching transistor Q113, and the fourteenth switching transistor Q114 works. The fifth diode D105 in the first free-wheeling branch and the fourth switching transistor Q104 form a free-wheeling path, and the seventh switching transistor Q107 in the second free-wheeling branch and a diode that is connected in parallel to and has a direction opposite to that of the eighth switching transistor Q108 form a free-wheeling path, so that the inverter has two parallel-connected free-wheeling paths. In this case, the inverter outputs the level "0". A preferred solution is that, the fourth switching transistor and the seventh switching transistor both perform switching at the third frequency.

When the inverter works in the fourth modality, in the inverter, only the fifth switching transistor Q105, the sixth switching transistor Q106, and the fourteenth switching transistor Q114 are in a working state, while none of the first switching transistor Q101, the second switching transistor Q102, the third switching transistor Q103, the fourth switching transistor Q104, the seventh switching transistor Q107, the eighth switching transistor Q108, and the thirteenth switching transistor Q113 works. In this case, the inverter outputs the level "-2".

In the fourth mode, a preferred solution is that, the sixth switching transistor Q106 performs switching at the second frequency, the fifth switching transistor Q105 performs switching at the third frequency, and the fourteenth switching transistor Q114 performs switching at the fourth frequency.

When the inverter works in the fifth modality, in the inverter, it may be that only the second switching transistor Q102 is in a working state, while none of the first switching transistor Q101, the third switching transistor Q103, the fourth switching transistor Q104, the fifth switching transistor Q105, the sixth switching transistor Q106, the seventh switching transistor Q107, and the eighth switching transistor Q108, the thirteenth switching transistor Q113, and the fourteenth switching transistor Q114 works. In this case, the inverter outputs the level "-1". A preferred solution is that, the second switching transistor Q102 performs switching at the first frequency.

To reduce a conduction loss of a switching transistor, when the inverter works in the fifth modality, it may also be that only the second switching transistor Q102, the fifth switching transistor Q105, and the sixth switching transistor Q106 are in a working state, while none of the first switching transistor Q101, the third switching transistor Q103, the fourth switching transistor Q104, the seventh switching transistor Q107, the eighth switching transistor Q108, the thirteenth switching transistor Q113, and the fourteenth switching transistor Q114 works.

When the inverter works in the sixth modality, only the fifth switching transistor Q105 and the eighth switching transistor Q108 of the inverter are in a working state, while none of the first switching transistor Q101, the second switching transistor Q102, the third switching transistor Q103, the fourth switching transistor Q104, the sixth switching transistor Q106, the seventh switching transistor Q107, the thirteenth switching transistor Q113, and the fourteenth switching transistor Q114 works. The sixth diode D106 in the first free-wheeling branch and the fifth switching transistor Q105 form a free-wheeling path, and a diode that is connected in parallel to and has a direction opposite to that of the seventh switching transistor Q107 in the second free-wheeling branch and the eighth switching transistor Q108 form a free-wheeling path, so that the inverter has two parallel-connected free-wheeling paths. In this case, the inverter outputs the level "0". A preferred solution is that, the fifth switching transistor and the eighth switching transistor both perform switching at the third frequency.

As can be seen, when a zero level is output, the first free-wheeling branch and the second free-wheeling branch work in parallel. Therefore, a current flowing through each free-wheeling branch is decreased, thereby reducing the conduction loss of the switching transistor.

A specific structure of the single-phase inverter where the first inverting topology unit is an I-type three-level inverting topology unit, and the second inverting topology unit is a two-level inverting topology unit is described in the following by using an embodiment.

### Embodiment 4

In this embodiment, a case in which the first direct-current voltage boost circuit and the second direct-current voltage boost circuit are both Boost circuits, the first energy storage unit is a first capacitor C11, the second energy storage unit is a second capacitor C12, the third energy storage unit is a third capacitor C13, and the fourth energy storage unit is a fourth capacitor C14 is used as an example for description. Actually, neither constitution nor structures of the first direct-current voltage boost circuit, the second direct-current voltage boost circuit, the first energy storage unit, the second energy storage unit, the third energy storage unit, and the fourth energy storage unit are not limited in the embodiment of the present invention.

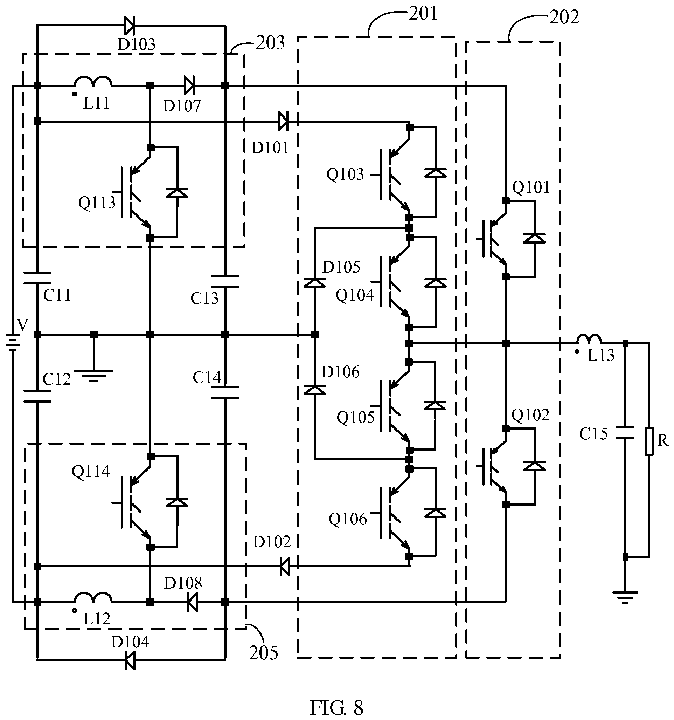

Referring to FIG. 8, the present invention provides Embodiment 4 of a single-phase inverter. In this embodiment, the inverter includes: a first inverting topology unit 201, a second inverting topology unit 202, a first direct-current voltage boost circuit 203, a second direct-current voltage boost circuit 205, a first diode D101, a second diode D102, a third diode D103, and a fourth diode D104. The first direct-current voltage boost circuit 203 includes a first inductor L11, a seventh diode D107, and a thirteenth switching transistor Q113, and the second direct-current voltage boost circuit 205 includes a second inductor L12, an eighth diode D108, and a fourteenth switching transistor Q114. Components of the inverter in this embodiment are exactly the same as those of the inverter in Embodiment 2 shown in FIG. 6, and the only difference lies in that positions of the first inverting topology unit and the second inverting topology unit in Embodiment 2 are exchanged. Therefore, the following describes only the first inverting topology unit, the second inverting topology unit and connection relationships between them and other components. For the other components and their connection relationships, refer to related content in Embodiment 2. No details are repeated herein. The first inverting topology unit 201 is an I-type three-level inverting topology unit, and includes a third switching transistor Q103, a fourth switching transistor Q104, a fifth switching transistor Q105, and a sixth switching transistor Q106 that are serially connected and have a same conducting direction, and a first free-wheeling branch. The first free-wheeling branch includes a fifth diode D105 and a sixth diode D106. The third switching transistor Q103, the fourth switching transistor Q104, and the first diode D101 are serially connected on a third branch, the fifth switching transistor Q105, the sixth switching transistor Q106, and the second diode D102 are serially connected on a fourth branch, a first end of the third branch is connected to the positive output end of the direct-current power supply, a second end of the third branch is connected to a first end of the fourth branch, and a second end of the fourth branch is connected to the negative output end of the direct-current power supply. A conducting direction of the third switching transistor Q103, the fourth switching transistor Q104, and the first diode D101 makes a current flow from the first end of the third branch to the second end, and a conducting direction of the fifth switching transistor Q105, the sixth switching transistor Q106, and the second diode D102 makes a current flow from the first end of the fourth branch to the second end. An anode of the fifth diode D105 and a cathode of the sixth diode D106 are connected to the second end of the first capacitor C11, a cathode of the fifth diode D105 is connected between the third switching transistor Q103 and the fourth switching transistor Q104, and an anode of the sixth diode D106 is connected between the fifth switching transistor Q105 and the sixth switching transistor Q106.

It should be noted that, in this embodiment, the third branch includes the first diode D101, the third switching transistor Q103, and the fourth switching transistor Q104 that are serially connected, and position relationships between the third switching transistor Q103, the fourth switching transistor Q104, and the first switching transistor Q101 may be those shown in FIG. 8, that is, the anode of the first diode D101 is connected to the positive output end of the direct-current power supply V, the cathode of the first diode D101 is connected to the third switching transistor Q103 and the fourth switching transistor Q104; and positions of the first diode D101 and the third switching transistor Q103 or the fourth switching transistor Q104 may also be exchanged. Likewise, the fourth branch includes the second diode D102, the fifth switching transistor Q105, and the sixth switching transistor Q106 that are serially connected, and position relationships between the second diode D102, the fifth switching transistor Q105, and the sixth switching transistor Q106 may be those shown in FIG. 8; and positions of the second diode D102 and the fifth switching transistor Q105 or the sixth switching transistor Q106 may also be exchanged.

The second inverting topology unit 202 is a two-level inverting topology unit, and includes a first switching transistor Q101 and a second switching transistor Q102 that are serially connected and have a same conducting direction. The first switching transistor Q101 and the second switching transistor Q102 are serially connected between the cathode of the third diode D103 and the anode of the fourth diode D104, and the conducting direction of the first switching transistor and the second switching transistor makes a current flow from the third diode to the fourth diode.

A common node of the first switching transistor Q101 and the second switching transistor Q102 is connected to the second end of the third branch, and serves as an alternating-current output end of the inverter in this embodiment.

As can be seen from the technical solution, compared with the prior art, in the embodiment of the present invention, a bridge arm formed by the first diode D101, the I-type three-level inverting topology unit, and the second diode D102 and a bridge arm formed by the third diode D103, the two-level inverting topology unit, and the fourth diode D104 are connected in parallel at two ends of the direct-current power supply V. Therefore, when the direct-current power supply outputs a high voltage, neither the thirteenth switching transistor Q113 nor the fourteenth switching transistor Q114 works, the two-level inverting topology unit and the I-type three-level inverting topology unit work in a parallel structure, and the parallel structure decreases a current flowing through a switching transistor of each inverting topology unit. According to a calculation formula of a conduction loss *P*: *P* = *I²*×*R*, where *I* is a current flowing through a switching transistor, and *R* is an on resistance of the switching transistor, it can be seen that, in this embodiment, a conduction loss of the switching transistor is reduced by decreasing the current flowing through the switching transistor. Meanwhile, reduction in the conduction loss of the switching transistor decreases a heat loss of the inverter, thereby further improving the working efficiency of the inverter.

The single-phase inverter shown in FIG. 8 is a five-level inverter, and has a first working mode and a second working mode. In the first working mode, a specific working condition is exactly the same as that of the inverter show in FIG. 6 in the first working mode, and no details are repeated herein. In the second working mode, the inverter in this embodiment works in a first modality, a second modality, a third modality, a fourth modality, a fifth modality, or a sixth modality.

Specifically, when the inverter works in the first modality, in the inverter, only the first switching transistor Q101 and the thirteenth switching transistor Q113 are in a working state, while none of the second switching transistor Q102, the third switching transistor Q103, the fourth switching transistor Q104, the fifth switching transistor Q105, the sixth switching transistor Q106, and the fourteenth switching transistor Q114 works. In this case, after boosting the voltage of the direct-current power supply, a bus voltage output by the seventh diode D107 is applied to the first switching transistor Q101. In this case, the inverter outputs the level "+2".

In the first mode, a preferred solution is that, the first switching transistor Q101 performs switching at a first frequency, and the thirteenth switching transistor performs switching at a fourth frequency. When the inverter works in the second modality, in the inverter, it may be that, only the third switching transistor Q103 and the fourth switching transistor Q104 are in a working state, while none of the first switching transistor Q101, the second switching transistor Q102, the fifth switching transistor Q105, the sixth switching transistor Q106, the thirteenth switching transistor Q113, and the fourteenth switching transistor Q114 works. In this case, a bus voltage output by the positive output end of the direct-current power supply V is applied to the third switching transistor Q103 and the fourth switching transistor Q104. In this case, the inverter outputs the level "+1". A preferred solution is that, the third switching transistor Q103 performs switching at a second frequency, and the fourth switching transistor Q104 performs switching at a third frequency. In this case, the inverter in this embodiment outputs the level "+2" in the first modality through the first switching transistor, and outputs the level "+1" in the second modality through the third switching transistor and the fourth switching transistor. Compared with that the switching transistor 21 in FIG. 1 performs switching all the time when the level "+2" or "+1" is output, the fourth switching transistor Q104 of the inverter in this embodiment has a shorter working time, and therefore has a longer service life.

To reduce a conduction loss of a switching transistor, when the inverter works in the second modality, it may also be that only the first switching transistor Q101, the third switching transistor Q103, and the fourth switching transistor Q104 are in a working state, while none of the second switching transistor Q102, the fifth switching transistor Q105, the sixth switching transistor Q106, the thirteenth switching transistor Q113, and the fourteenth switching transistor Q114 works. When the inverter works in the third modality, only the fourth switching transistor Q104 of the inverter is in a working state, while none of the first switching transistor Q101, the second switching transistor Q102, the third switching transistor Q103, the fifth switching transistor Q105, the sixth switching transistor Q106, the thirteenth switching transistor Q113, and the fourteenth switching transistor Q114 works. The fifth diode D105 in the first free-wheeling branch and the fourth switching transistor Q104 form a free-wheeling path. In this case, the inverter outputs the level "0". A preferred solution is that, the fourth switching transistor performs switching at the third frequency. In the inverter in this embodiment, in both the first modality and the third modality, the fourth switching transistor works at the third frequency, that is, a low frequency. However, the switching transistor 21 in FIG. 1 works in a low-frequency switching state when the level "+2" is output, and works in a high-frequency switching state when the level "+1" is output. Therefore, compared with the inverter in FIG. 1, the fourth switching transistor of the inverter in this embodiment does not need to be switched between high and low frequencies, and therefore has a lower switching loss.

When the inverter works in the fourth modality, in the inverter, only the second switching transistor Q102 and the fourteenth switching transistor Q114 are in a working state, while none of the first switching transistor Q101, the third switching transistor Q103, the fourth switching transistor Q104, the fifth switching transistor Q105, the sixth switching transistor Q106, and the thirteenth switching transistor Q113 works. In this case, after boosting the voltage of the direct-current power supply, a bus voltage output by the eighth diode D108 is applied to the second switching transistor Q102. In this case, the inverter outputs the level "-2".

In the fourth mode, a preferred solution is that, the second switching transistor Q102 performs switching at the first frequency, and the fourteenth switching transistor performs switching at the fourth frequency.

When the inverter works in the fifth modality, in the inverter, it may be that only the fifth switching transistor Q105 and the sixth switching transistor are in a working state, while none of the first switching transistor Q101, the second switching transistor Q102, the third switching transistor Q103, the fourth switching transistor Q104, the thirteenth switching transistor Q113, and the fourteenth switching transistor Q114 works. In this case, a bus voltage output by the negative output end of the direct-current power supply V is applied to the second switching transistor Q102. In this case, the inverter outputs the level "-1". A preferred solution is that, the sixth switching transistor Q106 performs switching at the second frequency, and the fifth switching transistor Q105 performs switching at the third frequency. The inverter in this embodiment outputs the level "-2" in the fourth modality through the second switching transistor, and outputs the level "-1" in the fifth modality through the fifth switching transistor and the sixth switching transistor. Compared with that the switching transistor 25 in FIG. 1 performs switching all the time when the level "-2" or "-1" is output, the fifth switching transistor Q105 of the inverter in this embodiment has a shorter working time, and therefore has a longer service life.

To reduce a conduction loss of a switching transistor, when the inverter works in the fifth modality, it may also be that only the second switching transistor Q102, the fifth switching transistor Q105, and the sixth switching transistor Q106 are in a working state, while none of the first switching transistor Q101, the third switching transistor Q103, the fourth switching transistor Q104, the thirteenth switching transistor Q113, and the fourteenth switching transistor Q114 works.

When the inverter works in the sixth modality, only the fifth switching transistor Q105 of the inverter is in a working state, while none of the first switching transistor Q101, the second switching transistor Q102, the third switching transistor Q103, the fourth switching transistor Q104, the sixth switching transistor Q106, the thirteenth switching transistor Q113, and the fourteenth switching transistor Q114 works. The sixth diode D106 in the first free-wheeling branch and the fifth switching transistor Q105 form a free-wheeling path. In this case, the inverter outputs the level "0". A preferred solution is that, the fifth switching transistor performs switching at the third frequency.

As can be seen, when the inverter in this embodiment is in the second working mode, the high voltage after the boosting by a Boost circuit is output through a bridge arm that has only one switching transistor, the low voltage output by the direct-current power supply and is not boosted is output through a bridge arm that has two switching transistors. Obviously, the structure is not as reasonable as that of the inverter shown in FIG. 6.

A specific structure where the first inverting topology unit is an I-type three-level inverting topology unit, and the second inverting topology unit is a T-type three-level inverting topology unit is described in the following by using an embodiment.

### Embodiment 5

In this embodiment, a case in which the first direct-current voltage boost circuit and the second direct-current voltage boost circuit are both Boost circuits, the first energy storage unit is a first capacitor C11, the second energy storage unit is a second capacitor C12, the third energy storage unit is a third capacitor C13, and the fourth energy storage unit is a fourth capacitor C14 is used as an example for description. Actually, neither constitution nor structures of the first direct-current voltage boost circuit, the second direct-current voltage boost circuit, the first energy storage unit, the second energy storage unit, the third energy storage unit, and the fourth energy storage unit are not limited in the embodiment of the present invention.

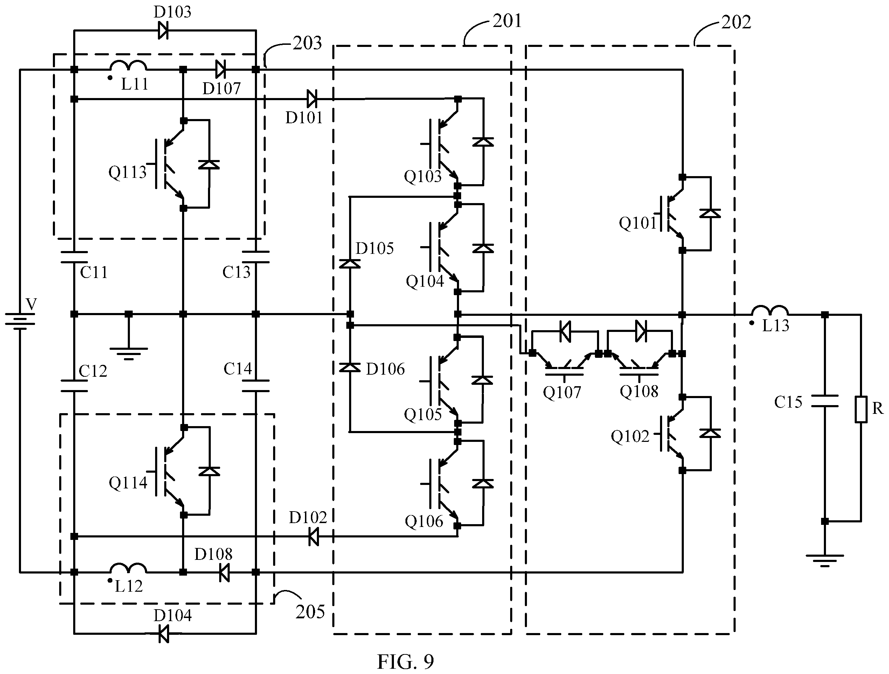

Referring to FIG. 9, the present invention provides Embodiment 5 of a single-phase inverter. In this embodiment, the inverter includes: a first inverting topology unit 201, a second inverting topology unit 202, a first direct-current voltage boost circuit 203, a second direct-current voltage boost circuit 205, a first diode D101, a second diode D102, a third diode D103, and a fourth diode D104. The first direct-current voltage boost circuit 203 includes a first inductor L11, a seventh diode D107, and a thirteenth switching transistor Q113, and the second direct-current voltage boost circuit 205 includes a second inductor L12, an eighth diode D108, and a fourteenth switching transistor Q114. Components of the inverter in this embodiment are exactly the same as those of the inverter in Embodiment 3 shown in FIG. 7, and the only difference lies in that positions of the first inverting topology unit and the second inverting topology unit in Embodiment 3 are exchanged. Therefore, the following describes only the first inverting topology unit, the second inverting topology unit and connection relationships between them and other components. For the other components, refer to related content in Embodiment 3. No details are repeated herein.

The first inverting topology unit 201 is an I-type three-level inverting topology unit, and includes a third switching transistor Q103, a fourth switching transistor Q104, a fifth switching transistor Q105, and a sixth switching transistor Q106 that are serially connected and have a same conducting direction, and a first free-wheeling branch. The first free-wheeling branch includes a fifth diode D105 and a sixth diode D106. The third switching transistor Q103, the fourth switching transistor Q104, and the first diode D101 are serially connected on a third branch, the fifth switching transistor Q105, the sixth switching transistor Q106, and the second diode D102 are serially connected on a fourth branch, a first end of the third branch is connected to the positive output end of the direct-current power supply, a second end of the third branch is connected to a first end of the fourth branch, and a second end of the fourth branch is connected to the negative output end of the direct-current power supply. A conducting direction of the third switching transistor Q103, the fourth switching transistor Q104, and the first diode D101 makes a current flow from the first end of the third branch to the second end, and a conducting direction of the fifth switching transistor Q105, the sixth switching transistor Q106, and the second diode D102 makes a current flow from the first end of the fourth branch to the second end. An anode of the fifth diode D105 and a cathode of the sixth diode D106 are connected to the second end of the first capacitor C11, a cathode of the fifth diode D105 is connected between the third switching transistor Q103 and the fourth switching transistor Q104, and an anode of the sixth diode D106 is connected between the fifth switching transistor Q105 and the sixth switching transistor Q106.

It should be noted that, in this embodiment, the third branch includes the first diode D101, the third switching transistor Q103, and the fourth switching transistor Q104 that are serially connected, position relationships between the third switching transistor Q103, the fourth switching transistor Q104, and the first switching transistor Q101 may be those shown in FIG. 9, that is, the anode of the first diode D101 is connected to the positive output end of the direct-current power supply V, the cathode of the first diode D101 is connected to the third switching transistor Q103 and the fourth switching transistor Q104; and positions of the first diode D101 and the third switching transistor Q103 or the fourth switching transistor Q104 may also be exchanged. Likewise, the fourth branch includes the second diode D102, the fifth switching transistor Q105, and the sixth switching transistor Q106 that are serially connected, and position relationships between the second diode D102, the fifth switching transistor Q105, and the sixth switching transistor Q106 may be those shown in FIG. 9; and positions of the second diode D102 and the fifth switching transistor Q105 or the sixth switching transistor Q106 may also be exchanged.

In this embodiment, the second inverting topology unit 202 is a T-type three-level inverting topology unit, and includes a first switching transistor Q101 and a second switching transistor Q102 that are serially connected and have a same conducting direction, and a second free-wheeling branch. The second free-wheeling branch includes a seventh switching transistor Q107 and an eighth switching transistor Q108 that are serially connected and have opposite conducting directions. The first switching transistor Q101 and the second switching transistor Q102 are serially connected between the cathode of the third diode D103 and the anode of the fourth diode D104, and the conducting direction of the first switching transistor and the second switching transistor makes a current flow from the third diode to the fourth diode. A series circuit formed by the seventh switching transistor Q107 and the eighth switching transistor Q108 is connected between a common node of the first capacitor C11 and the second capacitor C12, and a common node of the first switching transistor Q101 and the second switching transistor Q102.

It should be noted that, in this embodiment, a position relationship between the seventh switching transistor Q107 and the eighth switching transistor Q108 may be that shown in FIG. 9, that is, the seventh switching transistor Q107 is connected to the common node of the first capacitor C11 and the second capacitor C12, and the eighth switching transistor Q108 is connected to the common node of the first switching transistor Q101 and the second switching transistor Q102; and positions of the seventh switching transistor Q107 and the eighth switching transistor Q108 may also be exchanged. A conducting direction of the seventh switching transistor makes a current flow from the common node of the first capacitor C11 and the second capacitor C12 to the common node of the first switching transistor Q101 and the second switching transistor Q102, and a conducting direction of the eighth switching transistor makes a current flow from the common node of the first switching transistor Q101 and the second switching transistor Q102 to the common node of the first capacitor C11 and the second capacitor C12.

A common node of the fourth switching transistor Q104 and the fifth switching transistor Q105 is connected to the second end of the third branch, and serves as an alternating-current output end of the inverter in this embodiment.

As can be seen from the technical solution, compared with the prior art, in the embodiment of the present invention, a bridge arm formed by the first diode D101, the I-type three-level inverting topology unit, and the second diode D102 and a bridge arm formed by the third diode D103, the T-type three-level inverting topology unit, and the fourth diode D104 are connected in parallel at two ends of the direct-current power supply V. Therefore, when the direct-current power supply outputs a high voltage, neither the thirteenth switching transistor Q113 nor the fourteenth switching transistor Q114 works, the T-type three-level inverting topology unit and the I-type three-level inverting topology unit work in a parallel structure, and the parallel structure decreases a current flowing through a switching transistor of each inverting topology unit. According to a calculation formula of a conduction loss *P*: *P* = *I²*×*R*, where *I* is a current flowing through a switching transistor, and *R* is an on resistance of the switching transistor, it can be seen that, in this embodiment, a conduction loss of the switching transistor is reduced by decreasing the current flowing through the switching transistor. Meanwhile, reduction in the conduction loss of the switching transistor decreases a heat loss of the inverter, thereby further improving the working efficiency of the inverter.

Meanwhile, compared with the prior art, the inverter in this embodiment has two parallel-connected free-wheeling branches. Therefore, when a zero level is output, a current flowing through each free-wheeling branch is smaller, so that the conduction loss of the switching transistor is also reduced when a zero level is output.

The single-phase inverter shown in FIG. 9 is a five-level inverter, and has a first working mode and a second working mode. In the first working mode, a specific working condition is exactly the same as that of the inverter show in FIG. 7 in the first working mode, and no details are repeated herein. In the second working mode, the inverter in this embodiment works in a first modality, a second modality, a third modality, a fourth modality, a fifth modality, or a sixth modality.

Specifically, when the inverter works in the first modality, in the inverter, only the first switching transistor Q101 and the thirteenth switching transistor Q113 are in a working state, while none of the second switching transistor Q102, the third switching transistor Q103, the fourth switching transistor Q104, the fifth switching transistor Q105, the sixth switching transistor Q106, the seventh switching transistor Q107, the eighth switching transistor Q108, and the fourteenth switching transistor Q114 works. In this case, after boosting the voltage of the direct-current power supply, a bus voltage output by the seventh diode D107 is applied to the first switching transistor Q101. In this case, the inverter outputs the level "+2".

In the first mode, a preferred solution is that, the first switching transistor Q101 performs switching at a first frequency, and the thirteenth switching transistor performs switching at a fourth frequency. When the inverter works in the second modality, in the inverter, it may be that only the third switching transistor Q103 and the fourth switching transistor Q104 are in a working state, while none of the first switching transistor Q101, the second switching transistor Q102, the fifth switching transistor Q105, the sixth switching transistor Q106, the seventh switching transistor Q107, the eighth switching transistor Q108, the thirteenth switching transistor Q113, and the fourteenth switching transistor Q114 works. In this case, a bus voltage output by the positive output end of the direct-current power supply V is applied to the third switching transistor Q103 and the fourth switching transistor Q104. In this case, the inverter outputs the level "+1". A preferred solution is that, the third switching transistor Q103 performs switching at a second frequency, and the fourth switching transistor Q104 performs switching at a third frequency. The inverter in this embodiment outputs the level "+2" in the first modality through the first switching transistor, and outputs the level "+1" in the second modality through the third switching transistor and the fourth switching transistor. Compared with that the switching transistor 21 in FIG. 1 performs switching all the time when the level "+2" or "+1" is output, the fourth switching transistor Q104 of the inverter in this embodiment has a shorter working time, and therefore has a longer service life.

To reduce a conduction loss of a switching transistor, when the inverter works in the second modality, it may also be that only the first switching transistor Q101, the third switching transistor Q103, and the fourth switching transistor Q104 are in a working state, while none of the second switching transistor Q102, the fifth switching transistor Q105, the sixth switching transistor Q106, the seventh switching transistor Q107, the eighth switching transistor Q108, the thirteenth switching transistor Q113, and the fourteenth switching transistor Q114 works.

When the inverter works in the third modality, only the fourth switching transistor Q104 and the seventh switching transistor Q107 of the inverter are in a working state, while none of the first switching transistor Q101, the second switching transistor Q102, the third switching transistor Q103, the fifth switching transistor Q105, the sixth switching transistor Q106, the eighth switching transistor Q108, the thirteenth switching transistor Q113, and the fourteenth switching transistor Q114 works. The fifth diode D105 in the first free-wheeling branch and the fourth switching transistor Q104 form a free-wheeling path, and the seventh switching transistor Q107 in the second free-wheeling branch and a diode that is connected in parallel to and has a direction opposite to that of the eighth switching transistor Q108 form a free-wheeling path, so that the inverter has two parallel-connected free-wheeling paths. In this case, the inverter outputs the level "0". A preferred solution is that, the fourth switching transistor and the seventh switching transistor both perform switching at the third frequency. In the inverter in this embodiment, in both the first modality and the third modality, the fourth switching transistor works at the third frequency, that is, a low frequency. However, the switching transistor 21 in FIG. 1 works in a low-frequency switching state when the level "+2" is output, and works in a high-frequency switching state when the level "+1" is output. Therefore, compared with the inverter in FIG. 1, the fourth switching transistor of the inverter in this embodiment does not need to be switched between high and low frequencies, and therefore has a lower switching loss.

When the inverter works in the fourth modality, in the inverter, only the second switching transistor Q102 and the fourteenth switching transistor Q114 are in a working state, while none of the first switching transistor Q101, the third switching transistor Q103, the fourth switching transistor Q104, the fifth switching transistor Q105, the sixth switching transistor Q106, the seventh switching transistor Q107, the eighth switching transistor Q108, and the thirteenth switching transistor Q113 works. In this case, after boosting the voltage of the direct-current power supply, a bus voltage output by the eighth diode D108 is applied to the second switching transistor Q102. In this case, the inverter outputs the level "-2".

In the fourth mode, a preferred solution is that, the second switching transistor Q102 performs switching at the first frequency, and the fourteenth switching transistor performs switching at the fourth frequency.

When the inverter works in the fifth modality, in the inverter, it may be that only the fifth switching transistor Q105 and the sixth switching transistor Q106 are in a working state, while none of the first switching transistor Q101, the second switching transistor Q102, the third switching transistor Q103, the fourth switching transistor Q104, the seventh switching transistor Q107, the eighth switching transistor Q108, the thirteenth switching transistor Q113, and the fourteenth switching transistor Q114 works. In this case, a bus voltage output by the negative output end of the direct-current power supply V is applied to the second switching transistor Q102. In this case, the inverter outputs the level "-1". A preferred solution is that, the sixth switching transistor Q106 performs switching at the second frequency, and the fifth switching transistor Q105 performs switching at the third frequency. The inverter in this embodiment outputs the level "-2" in the fourth modality through the second switching transistor, and outputs the level "-1" in the fifth modality through the fifth switching transistor and the sixth switching transistor. Compared with that the switching transistor 25 in FIG. 1 performs switching all the time when the level "-2" or "-1" is output, the fifth switching transistor Q105 of the inverter in this embodiment has a shorter working time, and therefore has a longer service life.

To reduce a conduction loss of a switching transistor, when the inverter works in the fifth modality, it may also be that only the second switching transistor Q102, the fifth switching transistor Q105, and the sixth switching transistor Q106 are in a working state, while none of the first switching transistor Q101, the third switching transistor Q103, the fourth switching transistor Q104, the thirteenth switching transistor Q113, and the fourteenth switching transistor Q114 works.

When the inverter works in the sixth modality, only the fifth switching transistor Q105 and the eighth switching transistor Q108 of the inverter are in a working state, while none of the first switching transistor Q101, the second switching transistor Q102, the third switching transistor Q103, the fourth switching transistor Q104, the sixth switching transistor Q106, the seventh switching transistor Q107, the thirteenth switching transistor Q113, and the fourteenth switching transistor Q114 works. The sixth diode D106 in the first free-wheeling branch and the fifth switching transistor Q105 form a free-wheeling path, and a diode that is connected in parallel to and has a direction opposite to that of the seventh switching transistor Q107 in the second free-wheeling branch and the eighth switching transistor Q108 form a free-wheeling path, so that the inverter has two parallel-connected free-wheeling paths. In this case, the inverter outputs the level "0". A preferred solution is that, the fifth switching transistor and the eighth switching transistor both perform switching at the third frequency. In the inverter in this embodiment, in both the fourth modality and the sixth modality, the fifth switching transistor works at the third frequency, that is, a low frequency. However, the switching transistor 25 in FIG. 1 works in a low-frequency switching state when the level "-2" is output, and works in a high-frequency switching state when the level "-1" is output. Therefore, compared with the inverter in FIG. 1, the fifth switching transistor of the inverter in this embodiment does not need to be switched between high and low frequencies, and therefore has a lower switching loss.

As can be seen, when a zero level is output, the first free-wheeling branch and the second free-wheeling branch work in parallel. Therefore, a current flowing through each free-wheeling branch is decreased, thereby reducing the conduction loss of the switching transistor.

A specific structure where the first inverting topology unit is a T-type three-level inverting topology unit, and the second inverting topology unit is also a T-type three-level inverting topology unit is described in the following by using an embodiment.

### Embodiment 6

In this embodiment, a case in which the first direct-current voltage boost circuit and the second direct-current voltage boost circuit are both Boost circuits, the first energy storage unit is a first capacitor C11, the second energy storage unit is a second capacitor C12, the third energy storage unit is a third capacitor C13, and the fourth energy storage unit is a fourth capacitor C14 is used as an example for description. Actually, neither constitution nor structures of the first direct-current voltage boost circuit, the second direct-current voltage boost circuit, the first energy storage unit, the second energy storage unit, the third energy storage unit, and the fourth energy storage unit are not limited in the embodiment of the present invention.

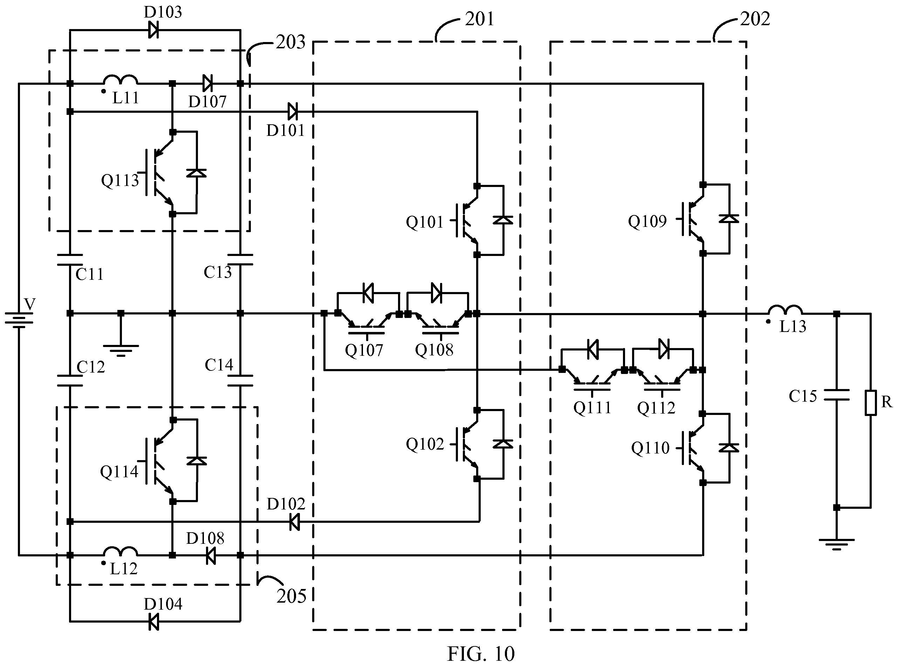

Referring to FIG. 10, the present invention provides Embodiment 6 of a single-phase inverter. In this embodiment, the inverter includes: a first inverting topology unit 201, a second inverting topology unit 202, a first direct-current voltage boost circuit 203, a second direct-current voltage boost circuit 205, a first diode D101, a second diode D102, a third diode D103, and a fourth diode D104. The first direct-current voltage boost circuit 203 includes a first inductor L11, a seventh diode D107, and a thirteenth switching transistor Q113, and the second direct-current voltage boost circuit 205 includes a second inductor L12, an eighth diode D108, and a fourteenth switching transistor Q114.

A positive output end of a direct-current power supply V, a first end of the first inductor L11, and a first end of the first capacitor C11 are connected to an anode of the third diode D103. A negative output end of the direct-current power supply V, a first end of the second inductor L12, and a first end of the second capacitor C12 are connected to a cathode of the fourth diode D104.

A second end of the first inductor L11 is connected to an anode of a ninth diode D201, a second end of the second inductor L12 is connected to a cathode of a twelfth diode D202, and a series circuit formed by a fifteenth switching transistor Q301 and a sixteenth switching transistor Q302 is further connected between the second end of the first inductor L11 and the second end of the second inductor L12. Specifically, it may be that, the fifteenth switching transistor Q301 is connected to the first inductor, and the sixteenth switching transistor Q302 is connected to the second inductor. A common node of the fifteenth switching transistor Q301 and the sixteenth switching transistor Q302 is grounded; and a conducting direction of the fifteenth switching transistor Q301 makes a current flow from the second end of the first inductor L11 to the common node of the fifteenth switching transistor Q301 and the sixteenth switching transistor Q302, and a conducting direction of the sixteenth switching transistor Q302 makes a current flow from the common node of the fifteenth switching transistor Q301 and the sixteenth switching transistor Q302 to the second end of the second inductor L12.

A cathode of the ninth diode D201 and a first end of the third capacitor C13 are connected to a cathode of the third diode D103. An anode of the twelfth diode D202 and a first end of the fourth capacitor C14 are connected to an anode of the fourth diode D104.

A second end of the first capacitor C11, a second end of the second capacitor C12, and a second end of the third capacitor C13 are connected to a second end of the fourth capacitor C14, and the second end of the first capacitor C11 is connected to the common node of the fifteenth switching transistor Q301 and the sixteenth switching transistor Q302.

In this embodiment, the first inverting topology unit 201 is a T-type three-level inverting topology unit, and includes a first switching transistor Q101 and a second switching transistor Q102 that are serially connected and have a same conducting direction, and a second free-wheeling branch. The second free-wheeling branch includes a seventh switching transistor Q107 and an eighth switching transistor Q108 that are serially connected and have opposite conducting directions. The first switching transistor Q101 and the first diode D101 are serially connected on a first branch, the second switching transistor Q102 and the second diode D102 are serially connected on a second branch, a first end of the first branch is connected to the positive output end of the direct-current power supply V, a second end of the first branch is connected to a first end of the second branch, and a second end of the second branch is connected to the negative output end of the direct-current power supply V. A conducting direction of the first switching transistor Q101 and the first diode D101 makes a current flow from the first end of the first branch to the second end, and a conducting direction of the second switching transistor Q102 and the second diode D102 makes a current flow from the first end of the second branch to the second end.

It should be noted that, in this embodiment, the first branch includes the first diode D101 and the first switching transistor Q101 that are serially connected, and a position relationship between the first diode D101 and the first switching transistor Q101 may be that shown in FIG. 10, that is, an anode of the first diode D101 is connected to the positive output end of the direct-current power supply V, and a cathode of the first diode D101 is connected to the first switching transistor Q101; and positions of the first diode D101 and the first switching transistor Q101 in FIG. 10 may also be exchanged, and in this case, the first switching transistor Q101 is connected between the positive output end of the direct-current power supply V and the anode of the first diode D101. Likewise, the second branch includes the second diode D102 and the second switching transistor Q102 that are serially connected, and a position relationship between the second diode D102 and the second switching transistor Q102 may be that shown in FIG. 10, that is, a cathode of the second diode D102 is connected to the negative output end of the direct-current power supply V, and an anode of the second diode D102 is connected to the second switching transistor Q102; and positions of the second diode D102 and the second switching transistor Q102 in FIG. 10 may also be exchanged, and in this case, the second switching transistor Q102 is connected between the anode of the second diode D102 and the negative output end of the direct-current power supply V.

A series circuit formed by the seventh switching transistor Q107 and the eighth switching transistor Q108 is connected between the common node of the first capacitor C11 and the second capacitor C12, and the second end of the first branch. It should be noted that, in this embodiment, a position relationship between the seventh switching transistor Q107 and the eighth switching transistor Q108 may be that shown in FIG. 10, that is, the seventh switching transistor Q107 is connected to the common node of the first capacitor C11 and the second capacitor C12, and the eighth switching transistor Q108 is connected to the second end of the first branch; and positions of the seventh switching transistor Q107 and the eighth switching transistor Q108 may also be exchanged. A conducting direction of the seventh switching transistor makes a current flow from the common node of the first capacitor C11 and the second capacitor C12 to the second end of the first branch, and a conducting direction of the eighth switching transistor makes a current flow from the second end of the first branch to the common node of the first capacitor C11 and the second capacitor C12. The second inverting topology unit 202 is a T-type three-level inverting topology unit, and includes a ninth switching transistor Q109 and a tenth switching transistor Q110 that are serially connected and have a same conducting direction, and a third free-wheeling branch. The third free-wheeling branch includes an eleventh switching transistor Q111 and a twelfth switching transistor Q112 that are serially connected and have opposite conducting directions. A series circuit formed by the eleventh switching transistor Q111 and the twelfth switching transistor Q112 is connected between a common node of the first capacitor C11 and the second capacitor C12, and a common node of the ninth switching transistor Q109 and the tenth switching transistor Q110. It should be noted that, in this embodiment, a position relationship between the eleventh switching transistor Q111 and the twelfth switching transistor Q112 may be that shown in FIG. 10, and their positions may also be exchanged. A conducting direction of the eleventh switching transistor makes a current flow from the common node of the first capacitor C11 and the second capacitor C12 to the common node of the ninth switching transistor Q109 and the tenth switching transistor Q110, and a conducting direction of the twelfth switching transistor makes a current flow from the common node of the ninth switching transistor Q109 and the tenth switching transistor Q110 to the common node of the first capacitor C11 and the second capacitor C12.

The common node of the ninth switching transistor Q109 and the tenth switching transistor Q110 is connected to the second end of the first branch, and serves as an alternating-current output end of the inverter in this embodiment.

In this embodiment, the second end of the first capacitor C11 is grounded, and the alternating-current output end is connected to an alternating-current load, for example, the alternating-current output end may be, as shown in FIG. 10, connected to the inductor L13, the inductor L13 is serially connected to a load resistor R, and a capacitor C15 is connected in parallel at two ends of the load resistor R. In another embodiment, the second end of the first capacitor C11 may not be grounded, and an alternating-current load is connected between the alternating-current output end and the second end of the first capacitor C11.

As can be seen from the technical solution, compared with the prior art, in the embodiment of the present invention, a bridge arm formed by the first diode D101, the T-type three-level inverting topology unit, and the second diode D102 and a bridge arm formed by the third diode D103, the T-type three-level inverting topology unit, and the fourth diode D104 are connected in parallel at two ends of the direct-current power supply V. Therefore, when the direct-current power supply outputs a high voltage, neither the thirteenth switching transistor Q113 nor the fourteenth switching transistor Q114 works, the two T-type inverting topology units work in a parallel structure, and the parallel structure decreases a current flowing through a switching transistor of each inverting topology unit. According to a calculation formula of a conduction loss *P*: *P* = *I²*×*R*, where *I* is a current flowing through a switching transistor, and *R* is an on resistance of the switching transistor, it can be seen that, in this embodiment, a conduction loss of the switching transistor is reduced by decreasing the current flowing through the switching transistor. Meanwhile, reduction in the conduction loss of the switching transistor decreases a heat loss of the inverter, thereby further improving the working efficiency of the inverter.

Meanwhile, compared with the prior art, the inverter in this embodiment has two parallel-connected free-wheeling branches, that is, the second free-wheeling branch and the third free-wheeling branch. Therefore, when a zero level is output, a current flowing through each free-wheeling branch is smaller, so that the conduction loss of the switching transistor is also reduced when a zero level is output.

The single-phase inverter shown in FIG. 10 is a five-level inverter. The following introduces working modes of the inverter.

The inverter has two different working modes, that is, a first working mode and a second working mode. When the direct-current power supply outputs a high voltage, the inverter works in the first working mode, and in this case, the inverter is in a three-level working mode, and can output levels "+1", "0", and "-1". When the direct-current power supply outputs a low voltage, the inverter works in the second working mode, and in this case, the inverter is in a five-level working mode, and can output levels "+2", "+1", "0", "-1", and "-2". The following specifically describes the two working modes separately.

In the first working mode, neither the first direct-current voltage boost circuit nor the second direct-current voltage boost circuit works, that is, neither the thirteenth switching transistor Q113 nor the fourteenth switching transistor Q114 works, and the inverter works in a first modality, a second modality, a third modality, or a fourth modality.

Specifically, when the inverter works in the first modality, in the inverter, only the first switching transistor Q101 and the ninth switching transistor Q109 are in a working state, while none of the second switching transistor Q102, the seventh switching transistor Q107, and the eighth switching transistor Q108, the tenth switching transistor Q110, the eleventh switching transistor Q111, the twelfth switching transistor Q112, the thirteenth switching transistor Q113, and the fourteenth switching transistor Q114 works. In this case, a bus voltage output by the positive output end of the direct-current power supply V is applied to a parallel circuit formed by the first switching transistor Q101 and the ninth switching transistor Q109. Therefore, a current flowing through each switching transistor in the first switching transistor Q101 and the ninth switching transistor Q109 in the inverter in this embodiment is a half of the current flowing through the switching transistor 21 in the five-level inverter shown in FIG. 1, so that the conduction loss is smaller. In this case, the inverter outputs the level "+1".

In the first mode, a preferred solution is that, the first switching transistor Q101 and the ninth switching transistor Q109 both perform switching at a first frequency.

When the inverter works in the second modality, only the seventh switching transistor Q107 and the eleventh switching transistor Q111 of the inverter are in a working state, while none of the first switching transistor Q101, the second switching transistor Q102, the eighth switching transistor Q108, the ninth switching transistor Q109, the tenth switching transistor Q110, the twelfth switching transistor Q112, the thirteenth switching transistor Q113, and the fourteenth switching transistor Q114 works. The seventh switching transistor Q107 in the second free-wheeling branch and a diode that is connected in parallel to and has a direction opposite to that of the eighth switching transistor Q108 form a free-wheeling path, and the eleventh switching transistor Q111 in the third free-wheeling branch and a diode that is connected in parallel to and has a direction opposite to that of the twelfth switching transistor Q112 form a free-wheeling path, so that the inverter has two parallel-connected free-wheeling paths. In this case, the inverter outputs the level "0". A preferred solution is that, the seventh switching transistor and the eleventh switching transistor perform switching at a third frequency.

When the inverter works in the third modality, in the inverter, only the second switching transistor Q102 and the tenth switching transistor Q110 are in a working state, while none of the first switching transistor Q101, the seventh switching transistor Q107, the eighth switching transistor Q108, the ninth switching transistor Q109, the eleventh switching transistor Q111, the twelfth switching transistor Q112, the thirteenth switching transistor Q113, and the fourteenth switching transistor Q114 works. In this case, a bus voltage output by the positive output end of the direct-current power supply V is applied to a parallel circuit formed by the second switching transistor Q102 and the tenth switching transistor Q110. Therefore, a current flowing through each switching transistor in the second switching transistor Q102 and the tenth switching transistor Q110 in the inverter in this embodiment is a half of the current flowing through the switching transistor 25 in the five-level inverter shown in FIG. 1, so that the conduction loss is smaller. In this case, the inverter outputs the level "+1".

In the third mode, a preferred solution is that, the second switching transistor Q102 and the tenth switching transistor Q110 both perform switching at the first frequency.

When the inverter works in the fourth modality, only the eighth switching transistor Q108 and the twelfth switching transistor Q112 of the inverter are in a working state, while none of the first switching transistor Q101, the second switching transistor Q102, the seventh switching transistor Q107, the ninth switching transistor Q109, the tenth switching transistor Q110, the eleventh switching transistor Q111, the thirteenth switching transistor Q113, and the fourteenth switching transistor Q114 works. A diode that is connected in parallel to and has a direction opposite to that of the seventh switching transistor Q107 in the second free-wheeling branch and the eighth switching transistor Q108 form a free-wheeling path, and a diode that is connected in parallel to and has a direction opposite to that of the eleventh switching transistor Q111 in the third free-wheeling branch and the twelfth switching transistor Q112 form a free-wheeling path, so that the inverter has two parallel-connected free-wheeling paths. In this case, the inverter outputs the level "0". A preferred solution is that, the eighth switching transistor and the twelfth switching transistor perform switching at the third frequency.

The inverter may output a three-level alternating-current voltage by working in the four modalities. For example, a case in which the inverter outputs an alternating-current sine wave is used as an example, where the inverter sequentially works in the first modality, the second modality, the third modality, and the fourth modality, the inverter outputs a positive half-cycle sine wave when working in the first modality, outputs a zero level when working in the second modality, outputs a negative half-cycle sine wave when working in the third modality, and outputs a zero level when working in the fourth modality.

In the second working mode, the inverter works in the first modality, the second modality, the third modality, the fourth modality, a fifth modality, or a sixth modality.

Specifically, when the inverter works in the first modality, in the inverter, only the ninth switching transistor Q109 and the thirteenth switching transistor Q113 are in a working state, while none of the first switching transistor Q101, the second switching transistor Q102, the seventh switching transistor Q107, and the eighth switching transistor Q108, the tenth switching transistor Q110, the eleventh switching transistor Q111, the twelfth switching transistor Q112, and the fourteenth switching transistor Q114 works. In this case, a bus voltage output by the positive output end of the direct-current power supply V is applied to the ninth switching transistor Q109. In this case, the inverter outputs the level "+2".

In the first mode, a preferred solution is that, the ninth switching transistor Q109 performs switching at the first frequency, and the thirteenth switching transistor Q113 performs switching at a fourth frequency.

When the inverter works in the second modality, because the direct-current power supply outputs a low voltage in this case, in the inverter, it may be that only the first switching transistor Q101 is in a working state, while none of the second switching transistor Q102, the seventh switching transistor Q107, the eighth switching transistor Q108, the ninth switching transistor Q109, the tenth switching transistor Q110, the eleventh switching transistor Q111, the twelfth switching transistor Q112, the thirteenth switching transistor Q113, and the fourteenth switching transistor Q114 works. In this case, a bus voltage output by the positive output end of the direct-current power supply V is applied to the first switching transistor Q101. In this case, the inverter outputs the level "+1". A preferred solution is that, the first switching transistor Q101 performs switching at the first frequency. The inverter in this embodiment outputs the level "+2" in the first modality through the ninth switching transistor, and outputs the level "+1" in the second modality through the first switching transistor. Compared with that the switching transistor 21 in FIG. 1 performs switching all the time when the level "+2" or "+1" is output, the first switching transistor Q101 of the inverter in this embodiment has a shorter working time, and therefore has a longer service life.

To reduce a conduction loss of a switching transistor, when the inverter works in the second modality, it may also be that only the first switching transistor Q101 and the ninth switching transistor Q109 are in a working state, while none of the second switching transistor Q102, the seventh switching transistor Q107, the eighth switching transistor Q108, the tenth switching transistor Q110, the eleventh switching transistor Q111, the twelfth switching transistor Q112, the thirteenth switching transistor Q113, and the fourteenth switching transistor Q114 works. In this case, a bus voltage output by the positive output end of the direct-current power supply V is applied to a parallel circuit formed by the first switching transistor Q101 and the ninth switching transistor Q109. Therefore, a current flowing through each switching transistor in the first switching transistor Q101 and the ninth switching transistor Q109 in the inverter in this embodiment is a half of the current flowing through the switching transistor 21 in the five-level inverter shown in FIG. 1, so that the conduction loss is smaller. In this case, the inverter outputs the level "+1". A preferred solution is that, the first switching transistor Q101 and the ninth switching transistor Q109 both perform switching at the first frequency.

When the inverter works in the third modality, only the seventh switching transistor Q107 and the eleventh switching transistor Q111 of the inverter are in a working state, while none of the first switching transistor Q101, the second switching transistor Q102, the eighth switching transistor Q108, the ninth switching transistor Q109, the tenth switching transistor Q110, the twelfth switching transistor Q112, the thirteenth switching transistor Q113, and the fourteenth switching transistor Q114 works. The seventh switching transistor Q107 in the second free-wheeling branch and a diode that is connected in parallel to and has a direction opposite to that of the eighth switching transistor Q108 form a free-wheeling path, and the eleventh switching transistor Q111 in the third free-wheeling branch and a diode that is connected in parallel to and has a direction opposite to that of the twelfth switching transistor Q112 form a free-wheeling path, so that the inverter has two parallel-connected free-wheeling paths. In this case, the inverter outputs the level "0". A preferred solution is that, the seventh switching transistor and the eleventh switching transistor perform switching at the third frequency.

When the inverter works in the fourth modality, in the inverter, only the tenth switching transistor Q110 and the fourteenth switching transistor Q114 are in a working state, while none of the first switching transistor Q101, the second switching transistor Q102, the seventh switching transistor Q107, the eighth switching transistor Q108, the ninth switching transistor Q109, the eleventh switching transistor Q111, the twelfth switching transistor Q112, and the thirteenth switching transistor Q113 works. In this case, a bus voltage output by the positive output end of the direct-current power supply V is applied to the tenth switching transistor Q110. In this case, the inverter outputs the level "+2".

In the fourth mode, a preferred solution is that, the tenth switching transistor Q110 performs switching at the first frequency.

When the inverter works in the fifth modality, because the direct-current power supply outputs a low voltage in this case, in the inverter, it may be that only the second switching transistor Q102 is in a working state, while none of the first switching transistor Q101, the seventh switching transistor Q107, the eighth switching transistor Q108, the ninth switching transistor Q109, the tenth switching transistor Q110, the eleventh switching transistor Q111, the twelfth switching transistor Q112, the thirteenth switching transistor Q113, and the fourteenth switching transistor Q114 works. In this case, a bus voltage output by the positive output end of the direct-current power supply V is applied to the second switching transistor Q102. In this case, the inverter outputs the level "+1". A preferred solution is that, the second switching transistor Q102 performs switching at the first frequency. The inverter in this embodiment outputs the level "-2" in the fourth modality through the tenth switching transistor, and outputs the level "-1" in the fifth modality through the second switching transistor. Compared with that the switching transistor 25 in FIG. 1 performs switching all the time when the level "-2" or "-1" is output, the second switching transistor Q102 of the inverter in this embodiment has a shorter working time, and therefore has a longer service life.

To reduce a conduction loss of a switching transistor, when the inverter works in the second modality, it may also be that only the second switching transistor Q102 and the tenth switching transistor Q110 are in a working state, while none of the first switching transistor Q101, the seventh switching transistor Q107, the eighth switching transistor Q108, the ninth switching transistor Q109, the eleventh switching transistor Q111, the twelfth switching transistor Q112, the thirteenth switching transistor Q113, and the fourteenth switching transistor Q114 works. In this case, a bus voltage output by the positive output end of the direct-current power supply V is applied to a parallel circuit formed by the second switching transistor Q102 and the tenth switching transistor Q110. Therefore, a current flowing through each switching transistor in the second switching transistor Q102 and the tenth switching transistor Q110 in the inverter in this embodiment is a half of the current flowing through the switching transistor 25 in the five-level inverter shown in FIG. 1, so that the conduction loss is smaller. In this case, the inverter outputs the level "+1". A preferred solution is that, the second switching transistor Q102 and the tenth switching transistor Q110 both perform switching at the first frequency.

When the inverter works in the sixth modality, only the eighth switching transistor Q108 and the twelfth switching transistor Q112 of the inverter are in a working state, while none of the first switching transistor Q101, the second switching transistor Q102, the seventh switching transistor Q107, the ninth switching transistor Q109, the tenth switching transistor Q110, the eleventh switching transistor Q111, the thirteenth switching transistor Q113, and the fourteenth switching transistor Q114 works. A diode that is connected in parallel to and has a direction opposite to that of the seventh switching transistor Q107 in the second free-wheeling branch and the eighth switching transistor Q108 form a free-wheeling path, and a diode that is connected in parallel to and has a direction opposite to that of the eleventh switching transistor Q111 in the third free-wheeling branch and the twelfth switching transistor Q112 form a free-wheeling path, so that the inverter has two parallel-connected free-wheeling paths. In this case, the inverter outputs the level "0". A preferred solution is that, the eighth switching transistor and the twelfth switching transistor perform switching at the third frequency.

The inverter may output a five-level alternating-current voltage by working in the six modalities. For example, a case in which the inverter outputs an alternating-current sine wave is used as an example, where the inverter sequentially works in the second modality, the first modality, the second modality, the third modality, the fifth modality, the fourth modality, the fifth modality, and the sixth modality, the inverter outputs a positive half-cycle sine wave when working in the second modality, the first modality, and the second modality, outputs a zero level when working in the third modality, outputs a negative half-cycle sine wave when working in the fifth modality, the fourth modality, and the fifth modality, and outputs a zero level when working in the sixth modality.

### Embodiment 7

The present invention further provides a specific embodiment of a three-phase inverter. In this embodiment, the three-phase inverter includes three single-phase inverters of a same structure, where each single-phase inverter is the single-phase inverter provided in any embodiment of the present invention.

An alternating-current output end of each single-phase inverter serves as a three-phase alternating-current output end of the three-phase inverter in this embodiment.

As can be seen from the technical solution, compared with the prior art, in this embodiment, the three-phase inverter in this embodiment includes three single-phase inverters of the same structure, and in each single-phase inverter, a bridge arm formed by a first diode D101, a first inverting topology unit, and a second diode D102 and a bridge arm formed by a third diode D103, a second inverting topology unit, and a fourth diode D104 are connected in parallel at two ends of a direct-current power supply. Therefore, when the direct-current power supply outputs a high voltage, neither a first direct-current voltage boosting circuit 203 nor a second direct-current voltage boost circuit 205 works, the first inverting topology unit and the second inverting topology unit work in a parallel structure, and the parallel structure decreases a current flowing through a switching transistor of each inverting topology unit, which can be inferred according to a calculation formula of a conduction loss *P*: *P* = *I²* × *R*, where *I* is a current flowing through a switching transistor, and *R* is an on resistance of the switching transistor. As can be seen, in this embodiment, a current flowing through a switching transistor in each single-phase inverter in the three-phase inverter is decreased, thereby reducing a loss of the switching transistor. Meanwhile, reduction in the conduction loss of the switching transistor decreases a heat loss of the three-phase inverter in this embodiment, thereby further improving the working efficiency of the three-phase inverter in this embodiment.

In each single-phase inverter in the three-phase inverter in this embodiment, when an energy storage module includes a first energy storage unit, a second energy storage unit, a third energy storage unit, and a fourth energy storage unit, a second end of the first energy storage unit in each single-phase inverter is grounded.

Each single-phase inverter of the three-phase inverter in this embodiment has a first working mode and a second working mode. For details, refer to the working conditions of the single-phase inverter in the embodiments of the present invention. No details are repeated herein. It should be noted that, the single-phase inverters in the three-phase inverter in this embodiment not only have the same structure, but also have a same working manner, that is, at any time, working modes and working modalities of the single-phase inverters are completely consistent.

The foregoing descriptions are merely exemplary implementation manners of the present invention. It should be noted that a person of ordinary skill in the art may make certain improvements or polishing without departing from the principle of the present invention and the improvements or polishing shall fall within the protection scope of the present invention, as defined by the appended claims.

## Claims

1. A single-phase inverter, wherein the inverter comprises: a first inverting topology unit (201), a second inverting topology unit (202), a first direct-current voltage boost circuit (203), a second direct-current voltage boost circuit (205), a first diode (D101), a second diode (D102), a third diode (D103), and a fourth diode (D104);
a positive output end of a direct-current power supply (204) and an input end of the first direct-current voltage boost circuit (203) are connected to an anode of the third diode (D103);
a negative output end of the direct-current power supply (204) and an input end of the second direct-current voltage boost circuit (205) are connected to a cathode of the fourth diode (D104);
the first inverting topology unit (201) is connected between the positive output end of the direct-current power supply (204) and the negative output end of the direct-current power supply (204);
an output end of the first direct-current voltage boost circuit (203) is connected to a cathode of the third diode (D103);
an output end of the second direct-current voltage boost circuit (205) is connected to an anode of the fourth diode (D104);
the second inverting topology unit (202) is connected between the cathode of the third diode (D103) and the anode of the fourth diode (D104);
an energy storage module (206) performs energy storage according to output voltages of the direct-current power supply (204), the first direct-current voltage boost circuit (203), and the second direct-current voltage boost circuit (205);
the first inverting topology unit (201) and the second inverting topology unit (202) are both formed by an even number of switching transistors (Q101, Q102; Q109, Q110); and
a middle point of the first inverting topology unit (201) is connected to a middle point of the second inverting topology unit (202), and serves as an alternating-current output end of the inverter; the first diode (D101) is further serially connected on a connection circuit between the middle point of the first inverting topology unit (201) and the positive output end of the direct-current power supply (204), wherein the first diode (D101) makes a current flow from the positive output end of the direct-current power supply (204) to the middle point of the first inverting topology unit (201); and the second diode (D102) is further serially connected on a connection circuit between the middle point of the first inverting topology unit (201) and the negative output end of the direct-current power supply (204), wherein the second diode (D102) makes a current flow from the middle point of the first inverting topology unit (201) to the negative output end of the direct-current power supply (204),
wherein the energy storage module (206) comprises: a first energy storage unit (C11), a second energy storage unit (C12), a third energy storage unit (C13), and a fourth energy storage unit (C14), wherein:
a first end of the first energy storage unit (C11) is connected to the positive output end of the direct-current power supply (204);
a first end of the second energy storage unit (C12) is connected to the negative output end of the direct-current power supply (204);
a first end of the third energy storage unit (C13) is connected to the output end of the first direct-current voltage boost circuit (203);
a first end of the fourth energy storage unit (C14) is connected to the output end of the second direct-current voltage boost circuit (205); and
a second end of the first energy storage unit (C11), a second end of the second energy storage unit (C12), and a second end of the third energy storage unit (C13) are connected to a second end of the fourth energy storage unit (C14), wherein if the first inverting topology unit (201) has a free-wheeling branch, the free-wheeling branch of the first inverting topology unit (201) is connected to the second end of the first energy storage unit (C11), and the second end of the first energy storage unit (C11) is grounded or an alternating-current load (R) is connected between the alternating-current output end and the second end of the first energy storage unit (C11);
if the second inverting topology unit (202) has a free-wheeling branch, the free-wheeling branch of the second inverting topology unit (202) is connected to the second end of the first energy storage unit (C11), and the second end of the first energy storage unit (C11) is grounded or an alternating-current load (R) is connected between the alternating-current output end and the second end of the first energy storage unit (C11); and
if neither the first inverting topology unit (201) nor the second inverting topology unit (202) has a free-wheeling branch, the second end of the first energy storage unit (C11) is grounded, **characterized in that** the first inverting topology unit (201) is a T-type three-level inverting topology unit (201), and the second inverting topology unit (202) is a T-type three-level inverting topology unit (202), wherein:
the two T-type inverting topology units (201, 202) work in a parallel structure; and
each T-type three-level inverting topology unit (201, 202) comprises two switching transistors (Q101, Q102; Q109, Q110) that are serially connected and have a same conducting direction,
and a second free-wheeling branch, the second free-wheeling branch comprises two switching transistors (Q107, Q108; Q111, Q112) with opposite conducting directions, and the second free-wheeling branch is connected at a middle point of the two serially-connected switching transistors (Q101, Q102; Q109, Q110) of each T-type three-level inverting topology unit (201, 202).

2. The inverter according to claim 1, the first inverting topology unit (201) is a T-type three-level inverting topology unit (201), and includes a first switching transistor (Q101) and a second switching transistor (Q102) that are serially connected and have a same conducting direction,
and the second free-wheeling branch, where: the second free-wheeling branch includes a seventh switching transistor (Q107) and an eighth switching transistor (Q108) that are serially connected and have opposite conducting directions; the first switching transistor (Q101) and the first diode (D101) are serially connected on a first branch, the second switching transistor (Q102) and the second diode (D102) are serially connected on a second branch, a first end of the first branch is connected to the positive output end of the direct-current power supply (204), a second end of the first branch is connected to a first end of the second branch, and a second end of the second branch is connected to the negative output end of the direct-current power supply (204); a conducting direction of the first switching transistor (Q101) and the first diode (D101) makes a current flow from the first end of the first branch to the second end, and a conducting direction of the second switching transistor (Q102) and the second diode (D102) makes a current flow from the first end of the second branch to the second end; a series circuit formed by the seventh switching transistor (Q107) and the eighth switching transistor (Q108) is connected between a common node of the first energy storage unit (C11) and the second energy storage unit (C12) and the second end of the first branch; and the second end of the first branch is an alternating-current output end; and
the second inverting topology unit (202) is a T-type three-level inverting topology unit (202), and includes a ninth switching transistor (Q109) and a tenth switching transistor (Q110) that are serially connected and have a same conducting direction, and a third free-wheeling branch, where: the third free-wheeling branch includes an eleventh switching transistor (Q111) and a twelfth switching transistor (Q112) that are serially connected and have opposite conducting directions; and the eleventh switching transistor (Q111) and the twelfth switching transistor (Q112) are serially connected between the common node of the first energy storage unit (C11) and the second energy storage unit (C12), and a common node of the ninth switching transistor (Q109) and the tenth switching transistor (Q110), a conducting direction of the eleventh switching transistor (Q111) makes a current flow from the common node of the first energy storage unit (C11) and the second energy storage unit (C12) to the common node of the ninth switching transistor (Q109) and the tenth switching transistor (Q110), and a conducting direction of the twelfth switching transistor (Q112) makes a current flow from the common node of the ninth switching transistor (Q109) and the tenth switching transistor (Q110) to the common node of the first energy storage unit (C11) and the second energy storage unit (C12).

3. The inverter according to claim 2, the inverter has a first working mode and a second working mode; and in the first working mode, neither the first direct-current voltage boost circuit (203) nor the second direct-current voltage boost circuit (205) works, and the inverter works in a first modality, a second modality, a third modality, or a fourth modality, where: when the inverter works in the first modality, only the first switching transistor (Q101) and the ninth switching transistor (Q109) of the inverter are in a working state; when the inverter works in the second modality, only the seventh switching transistor (Q107) and the eleventh switching transistor (Q111) of the inverter are in a working state; when the inverter works in the third modality, only the second switching transistor (Q102) and the tenth switching transistor (Q110) of the inverter are in a working state; and when the inverter works in the fourth modality, only the eighth switching transistor (Q108) and the twelfth switching transistor (Q112) of the inverter are in a working state.

4. The inverter according to claim 3, when the inverter is in the second working mode, the inverter works in the first modality, the second modality, the third modality, the fourth modality, a fifth modality, or a sixth modality, where: when the inverter works in the first modality, only the first direct-current voltage boost circuit (203) and the ninth switching transistor (Q109) of the inverter are in a working state; when the inverter works in the second modality, only the first switching transistor (Q101) of the inverter is in a working state; when the inverter works in the third modality, only the seventh switching transistor (Q107) and the eleventh switching transistor (Q111) of the inverter are in a working state; when the inverter is in the fourth modality, only the second direct-current voltage boost circuit (205) and the tenth switching transistor (Q110) of the inverter are in a working state; when the inverter is in the fifth modality, only the second switching transistor of the inverter is in a working state; and when the inverter is in the sixth modality, only the eighth switching transistor (Q108) and the twelfth switching transistor (Q112) of the inverter are in a working state.

5. A three-phase inverter, wherein the three-phase inverter comprises three single-phase inverters of a same structure, and each single-phase inverter is the single-phase inverter according to any one of claims 1 to 4; and
an alternating-current output end of each single-phase inverter serves as a three-phase alternating-current output end of the three-phase inverter.

## Patentansprüche

1. Einphasenwechselrichter, wobei der Wechselrichter Folgendes umfasst: eine erste wechselrichtende Topologieeinheit (201), eine zweite wechselrichtende Topologieeinheit (202), eine erste Gleichspannungs-Boost-Schaltung (203), eine zweite Gleichspannungs-Boost-Schaltung (205), eine erste Diode (D101), eine zweite Diode (D102), eine dritte Diode (D103) und eine vierte Diode (D104); wobei ein positives Ausgangsende einer Gleichstromversorgung (204) und ein Eingangsende der ersten Gleichspannungs-Boost-Schaltung (203) mit einer Anode der dritten Diode (D103) verbunden sind;
ein negatives Ausgangsende der Gleichstromversorgung (204) und ein Eingangsende der zweiten Gleichspannungs-Boost-Schaltung (205) mit einer Kathode der vierten Diode (D104) verbunden sind;
die erste wechselrichtende Topologieeinheit (201) zwischen das positive Ausgangsende der Gleichstromversorgung (204) und das negative Ausgangsende der Gleichstromversorgung (204) geschaltet ist;
ein Ausgangsende der ersten Gleichspannungs-Boost-Schaltung (203) mit einer Kathode der dritten Diode (D103) verbunden ist;
ein Ausgangsende der zweiten Gleichspannungs-Boost-Schaltung (205) mit einer Anode der vierten Diode (D104) verbunden ist;
die zweite wechselrichtende Topologieeinheit (202) zwischen die Kathode der dritten Diode (D103) und die Anode der vierten Diode (D104) geschaltet ist;
ein Energiespeichermodul (206) eine Energiespeicherung gemäß Ausgangsspannungen der Gleichstromversorgung (204), der ersten Gleichspannungs-Boost-Schaltung (203) und der zweiten Gleichspannungs-Boost-Schaltung (205) durchführt;
die erste wechselrichtende Topologieeinheit (201) und die zweite wechselrichtende Topologieeinheit (202) beide durch eine gerade Zahl von Schalttransistoren (Q101, Q102; Q109, Q110) gebildet werden; und
ein Mittelpunkt der ersten wechselrichtenden Topologieeinheit (201) mit einem Mittelpunkt der zweiten wechselrichtenden Topologieeinheit (202) verbunden ist und als ein Wechselstromausgangsende des Wechselrichters dient;
die erste Diode (D101) ferner in einer Verbindungsschaltung zwischen dem Mittelpunkt der ersten wechselrichtenden Topologieeinheit (201) und dem positiven Ausgangsende der Gleichstromversorgung (204) in Reihe geschaltet ist, wobei die erste Diode (D101) einen Strom von dem positiven Ausgangsende der Gleichstromversorgung (204) zu dem Mittelpunkt der ersten wechselrichtenden Topologieeinheit (201) fließen lässt; und
die zweite Diode (D102) ferner in einer Verbindungsschaltung zwischen dem Mittelpunkt der ersten wechselrichtenden Topologieeinheit (201) und dem negativen Ausgangsende der Gleichstromversorgung (204) in Reihe geschaltet ist, wobei die zweite Diode (D102) einen Strom von dem Mittelpunkt der ersten wechselrichtenden Topologieeinheit (201) zu dem negativen Ausgangsende der Gleichstromversorgung (204) fließen lässt,
wobei das Energiespeichermodul (206) Folgendes umfasst: eine erste Energiespeichereinheit (C11), eine zweite Energiespeichereinheit (C12), eine dritte Energiespeichereinheit (C13) und eine vierte Energiespeichereinheit (C14), wobei:
ein erstes Ende der ersten Energiespeichereinheit (C11) mit dem positiven Ausgangsende der Gleichstromversorgung (204) verbunden ist;
ein erstes Ende der zweiten Energiespeichereinheit (C12) mit dem negativen Ausgangsende der Gleichstromversorgung (204) verbunden ist;
ein erstes Ende der dritten Energiespeichereinheit (C13) mit dem Ausgangsende der ersten Gleichspannungs-Boost-Schaltung (203) verbunden ist;
ein erstes Ende der vierten Energiespeichereinheit (C14) mit dem Ausgangsende der zweiten Gleichspannungs-Boost-Schaltung (205) verbunden ist; und
ein zweites Ende der ersten Energiespeichereinheit (C11), ein zweites Ende der zweiten Energiespeichereinheit (C12) und ein zweites Ende der dritten Energiespeichereinheit (C13) mit einem zweiten Ende der vierten Energiespeichereinheit (C14) verbunden sind,
wobei, wenn die erste wechselrichtende Topologieeinheit (201) einen Freilaufabzweig aufweist, der Freilaufabzweig der ersten wechselrichtenden Topologieeinheit (201) mit dem zweiten Ende der ersten Energiespeichereinheit (C11) verbunden ist, und
das zweite Ende der ersten Energiespeichereinheit (C11) geerdet ist oder eine Wechselstromlast (R) zwischen das Wechselstromausgangsende und das zweite Ende der ersten Energiespeichereinheit (C11) geschaltet ist;
wenn die zweite wechselrichtende Topologieeinheit (202) einen Freilaufabzweig aufweist, der Freilaufabzweig der zweiten wechselrichtenden Topologieeinheit (202) mit dem zweiten Ende der ersten Energiespeichereinheit (C11) verbunden ist, und
das zweite Ende der ersten Energiespeichereinheit (C11) geerdet ist oder eine Wechselstromlast (R) zwischen das Wechselstromausgangsende und das zweite Ende der ersten Energiespeichereinheit (C11) geschaltet ist; und
wenn weder die erste wechselrichtende Topologieeinheit (201) noch die zweite wechselrichtende Topologieeinheit (202) einen Freilaufabzweig aufweist, das zweite Ende der ersten Energiespeichereinheit (C11) geerdet ist,
**dadurch gekennzeichnet, dass**
die erste wechselrichtende Topologieeinheit (201) eine dreistufige wechselrichtende Topologieeinheit des T-Typs (201) ist und die zweite wechselrichtende Topologieeinheit (202) eine dreistufige wechselrichtende Topologieeinheit des T-Typs (202) ist, wobei:
die beiden wechselrichtenden Topologieeinheiten des T-Typs (201, 202) in einer parallelen Struktur arbeiten; und
jede dreistufige wechselrichtende Topologieeinheit des T-Typs (201, 202) zwei Schalttransistoren (Q101, Q102; Q109, Q110), die in Reihe geschaltet sind und eine gleiche Durchlassrichtung aufweisen, und einen zweiten Freilaufabzweig umfasst, wobei der zweite Freilaufabzweig zwei Schalttransistoren (Q107, Q108; Q111, Q112) mit entgegengesetzten Durchlassrichtungen umfasst und der zweite Freilaufabzweig mit einem Mittelpunkt der beiden in Reihe geschalteten Schalttransistoren (Q101, Q102; Q109, Q110) jeder dreistufigen wechselrichtenden Topologieeinheit des T-Typs (201, 202) verbunden ist.

2. Wechselrichter nach Anspruch 1, die erste wechselrichtende Topologieeinheit (201) eine dreistufige wechselrichtende Topologieeinheit des T-Typs (201) ist und einen ersten Schalttransistor (Q101) und einen zweiten Schalttransistor (Q102), die in Reihe geschaltet sind und eine gleiche Durchlassrichtung aufweisen, und den zweiten Freilaufabzweig beinhaltet, wobei:
der zweite Freilaufabzweig einen siebenten Schalttransistor (Q107) und einen achten Schalttransistor (Q108) beinhaltet, die in Reihe geschaltet sind und entgegengesetzte Durchlassrichtungen aufweisen;
der erste Schalttransistor (Q101) und die erste Diode (D101) in einem ersten Abzweig in Reihe geschaltet sind, der zweite Schalttransistor (Q102) und die zweite Diode (D102) in einem zweiten Abzweig in Reihe geschaltet sind, ein erstes Ende des ersten Abzweigs mit dem positiven Ausgangsende der Gleichstromversorgung (204) verbunden ist, ein zweites Ende des ersten Abzweigs mit einem ersten Ende des zweiten Abzweigs verbunden ist, und ein zweites Ende des zweiten Abzweigs mit dem negativen Ausgangsende der Gleichstromversorgung (204) verbunden ist;
eine Durchlassrichtung des ersten Schalttransistors (Q101) und der ersten Diode (D101) einen Strom von dem ersten Ende des ersten Abzweigs zu dem zweiten Ende fließen lässt, und eine Durchlassrichtung des zweiten Schalttransistors (Q102) und
der zweiten Diode (D102) einen Strom von dem ersten Ende des zweiten Abzweigs zu dem zweiten Ende fließen lässt;
eine Reihenschaltung, die durch den siebenten Schalttransistor (Q107) und den achten Schalttransistor (Q108) gebildet wird, zwischen einen gemeinsamen Knoten der ersten Energiespeichereinheit (C11) und der zweiten Energiespeichereinheit (C12) und das zweite Ende des ersten Abzweigs geschaltet ist; und
das zweite Ende des ersten Abzweigs ein Wechselstromausgangsende ist; und
die zweite wechselrichtende Topologieeinheit (202) eine dreistufige wechselrichtende Topologieeinheit des T-Typs (202) ist und einen neunten Schalttransistor (Q109) und einen zehnten Schalttransistor (Q110), die in Reihe geschaltet sind und eine gleiche Durchlassrichtung aufweisen, und einen dritten Freilaufabzweig beinhaltet, wobei:
der dritte Freilaufabzweig einen elften Schalttransistor (Q111) und einen zwölften Schalttransistor (Q112) beinhaltet, die in Reihe geschaltet sind und entgegengesetzte Durchlassrichtungen aufweisen; und
der elfte Schalttransistor (Q111) und der zwölfte Schalttransistor (Q112) zwischen den gemeinsamen Knoten der ersten Energiespeichereinheit (C11) und der zweiten Energiespeichereinheit (C12) und einen gemeinsamen Knoten des neunten Schalttransistors (Q109) und des zehnten Schalttransistors (Q110) in Reihe geschaltet sind,
eine Durchlassrichtung des elften Schalttransistors (Q111) einen Strom von dem gemeinsamen Knoten der ersten Energiespeichereinheit (C11) und der zweiten Energiespeichereinheit (C12) zu dem gemeinsamen Knoten des neunten Schalttransistors (Q109) und dem zehnten Schalttransistors (Q110) fließen lässt,
und eine Durchlassrichtung des zwölften Schalttransistors (Q112) einen Strom von dem gemeinsamen Knoten des neunten Schalttransistors (Q109) und des zehnten Schalttransistors (Q110) zu dem gemeinsamen Knoten der ersten Energiespeichereinheit (C11) und der zweiten Energiespeichereinheit (C12) fließen lässt.

3. Wechselrichter nach Anspruch 2, der Wechselrichter einen ersten Arbeitsmodus und einen zweiten Arbeitsmodus aufweist; und in dem ersten Arbeitsmodus weder die erste Gleichspannungs-Boost-Schaltung (203) noch die zweite Gleichspannungs-Boost-Schaltung (205) arbeitet, und der Wechselrichter in einer ersten Modalität, einer zweiten Modalität, einer dritten Modalität oder einer vierten Modalität arbeitet, wobei:
wenn der Wechselrichter in der ersten Modalität arbeitet, sich nur der erste Schalttransistor (Q101) und der neunte Schalttransistor (Q109) des Wechselrichters in einem Arbeitszustand befinden;
wenn der Wechselrichter in der zweiten Modalität arbeitet, sich nur der siebente Schalttransistor (Q107) und der elfte Schalttransistor (Q111) des Wechselrichters in einem Arbeitszustand befinden;
wenn der Wechselrichter in der dritten Modalität arbeitet, sich nur der zweite Schalttransistor (Q102) und der zehnte Schalttransistor (Q110) des Wechselrichters in einem Arbeitszustand befinden; und
wenn der Wechselrichter in der vierten Modalität arbeitet, sich nur der achte Schalttransistor (Q108) und der zwölfte Schalttransistor (Q112) des Wechselrichters in einem Arbeitszustand befinden.

4. Wechselrichter nach Anspruch 3, wobei, wenn sich der Wechselrichter in dem zweiten Arbeitsmodus befindet, der Wechselrichter in der ersten Modalität, der zweiten Modalität, der dritten Modalität, der vierten Modalität, einer fünften Modalität oder einer sechsten Modalität arbeitet:
wenn der Wechselrichter in der ersten Modalität arbeitet, sich nur die erste Gleichspannungs-Boost-Schaltung (203) und der neunte Schalttransistor (Q109) des Wechselrichters in einem Arbeitszustand befinden;
wenn der Wechselrichter in der zweiten Modalität arbeitet, sich nur der erste Schalttransistor (Q101) des Wechselrichters in einem Arbeitszustand befindet;
wenn der Wechselrichter in der dritten Modalität arbeitet, sich nur der siebente Schalttransistor (Q107) und der elfte Schalttransistor (Q111) des Wechselrichters in einem Arbeitszustand befinden;
wenn sich der Wechselrichter in der vierten Modalität befindet, sich nur die zweite Gleichspannungs-Boost-Schaltung (205) und der zehnte Schalttransistor (Q110) des Wechselrichters in einem Arbeitszustand befinden;
wenn sich der Wechselrichter in der fünften Modalität befindet, sich nur der zweite Schalttransistor des Wechselrichters in einem Arbeitszustand befindet; und
wenn sich der Wechselrichter in der sechsten Modalität befindet, sich nur der achte Schalttransistor (Q108) und der zwölfte Schalttransistor (Q112) des Wechselrichters in einem Arbeitszustand befinden.

5. Dreiphasenwechselrichter, wobei der Dreiphasenwechselrichter drei Einphasenwechselrichter einer gleichen Struktur umfasst und jeder Einphasenwechselrichter ein Einphasenwechselrichter nach einem der Ansprüche 1 bis 4 ist; und
ein Wechselstromausgangsende jedes Einphasenwechselrichters als ein Dreiphasenwechselstromausgangsende des Dreiphasenwechselrichters dient.

## Revendications

1. Onduleur monophasé, l'onduleur comprenant : une première unité à topologie inverseuse (201), une deuxième unité à topologie inverseuse (202), un premier circuit élévateur de tension en courant continu (203), un deuxième circuit élévateur de tension en courant continu (205), une première diode (D101), une deuxième diode (D102), une troisième diode (D103) et une quatrième diode (D104) ; dans lequel une extrémité de sortie positive d'une alimentation électrique en courant continu (204) et une extrémité d'entrée du premier circuit élévateur de tension en courant continu (203) sont connectées à une anode de la troisième diode (D103) ;
une extrémité de sortie négative de l'alimentation électrique en courant continu (204) et une extrémité d'entrée du deuxième circuit élévateur de tension en courant continu (205) sont connectées à une cathode de la quatrième diode (D104) ;
la première unité à topologie inverseuse (201) est connectée entre l'extrémité de sortie positive de l'alimentation électrique en courant continu (204) et l'extrémité de sortie négative de l'alimentation électrique en courant continu (204) ;
une extrémité de sortie du premier circuit élévateur de tension en courant continu (203) est connectée à une cathode de la troisième diode (D103) ;
une extrémité de sortie du deuxième circuit élévateur de tension en courant continu (205) est connectée à une anode de la quatrième diode (D104) ;
la deuxième unité à topologie inverseuse (202) est connectée entre la cathode de la troisième diode (D103) et l'anode de la quatrième diode (D104) ;
un module de stockage d'énergie (206) réalise un stockage d'énergie selon des tensions de sortie de l'alimentation électrique en courant continu (204), du premier circuit élévateur de tension en courant continu (203) et du deuxième circuit élévateur de tension en courant continu (205) ;
la première unité à topologie inverseuse (201) et la deuxième unité à topologie inverseuse (202) sont toutes deux formées d'un nombre pair de transistors de commutation (Q101, Q102 ; Q109, Q110) ; et
un point milieu de la première unité à topologie inverseuse (201) est connecté à un point milieu de la deuxième unité à topologie inverseuse (202) et sert d'extrémité de sortie en courant alternatif de l'onduleur ; la première diode (D101) est en outre connectée en série sur un circuit de connexion entre le point milieu de la première unité à topologie inverseuse (201) et l'extrémité de sortie positive de l'alimentation électrique en courant continu (204), la première diode (D101) faisant circuler un courant de l'extrémité de sortie positive de l'alimentation électrique en courant continu (204) au point milieu de la première unité à topologie inverseuse (201) ; et la deuxième diode (D102) est en outre connectée en série sur un circuit de connexion entre le point milieu de la première unité à topologie inverseuse (201) et l'extrémité de sortie négative de l'alimentation électrique en courant continu (204), la deuxième diode (D102) faisant circuler un courant du point milieu de la première unité à topologie inverseuse (201) à l'extrémité de sortie négative de l'alimentation électrique en courant continu (204),
le module de stockage d'énergie (206) comprenant : une première unité de stockage d'énergie (C11), une deuxième unité de stockage d'énergie (C12), une troisième unité de stockage d'énergie (C13) et une quatrième unité de stockage d'énergie (C14) :
une première extrémité de la première unité de stockage d'énergie (C11) étant connectée à l'extrémité de sortie positive de l'alimentation électrique en courant continu (204) ;
une première extrémité de la deuxième unité de stockage d'énergie (C12) étant connectée à l'extrémité de sortie négative de l'alimentation électrique en courant continu (204) ;
une première extrémité de la troisième unité de stockage d'énergie (C13) étant connectée à l'extrémité de sortie du premier circuit élévateur de tension en courant continu (203) ;
une première extrémité de la quatrième unité de stockage d'énergie (C14) étant connectée à l'extrémité de sortie du deuxième circuit élévateur de tension en courant continu (205) ; et
une deuxième extrémité de la première unité de stockage d'énergie (C11), une deuxième extrémité de la deuxième unité de stockage d'énergie (C12) et une deuxième extrémité de la troisième unité de stockage d'énergie (C13) étant connectées à une deuxième extrémité de la quatrième unité de stockage d'énergie (C14),
si la première unité à topologie inverseuse (201) possède une branche de roue libre, la branche de roue libre de la première unité à topologie inverseuse (201) étant connectée à la deuxième extrémité de la première unité de stockage d'énergie (C11), et la deuxième extrémité de la première unité de stockage d'énergie (C11) étant mise à la masse ou une charge en courant alternatif (R) étant connectée entre l'extrémité de sortie en courant alternatif et la deuxième extrémité de la première unité de stockage d'énergie (C11) ;
si la deuxième unité à topologie inverseuse (202) possède une branche de roue libre, la branche de roue libre de la deuxième unité à topologie inverseuse (202) étant connectée à la deuxième extrémité de la première unité de stockage d'énergie (C11), et la deuxième extrémité de la première unité de stockage d'énergie (C11) étant mise à la masse ou une charge en courant alternatif (R) étant connectée entre l'extrémité de sortie en courant alternatif et la deuxième extrémité de la première unité de stockage d'énergie (C11) ; et
si ni la première unité à topologie inverseuse (201), ni la deuxième unité à topologie inverseuse (202) possède une branche de roue libre, la deuxième extrémité de la première unité de stockage d'énergie (C11) étant mise à la masse,
**caractérisé en ce que**
la première unité à topologie inverseuse (201) est une unité à topologie inverseuse à trois niveaux de type T (201) et la deuxième unité à topologie inverseuse (202) est une unité à topologie inverseuse à trois niveaux de type T (202) :
les deux unités à topologie inverseuse de type T (201, 202) fonctionnant dans une structure parallèle ; et
chaque unité à topologie inverseuse à trois niveaux de type T (201, 202) comprenant deux transistors de commutation (Q101, Q102 ; Q109, Q110) connectés en série et présentant un même sens de conduction, et une deuxième branche de roue libre, la deuxième branche de roue libre comprenant deux transistors de commutation (Q107, Q108 ; Q111, Q112) de sens de conduction opposés, et la deuxième branche de roue libre étant connectée à un point milieu des deux transistors de commutation connectés en série (Q101, Q102 ; Q109, Q110) de chaque unité à topologie inverseuse à trois niveaux de type T (201, 202).

2. Onduleur selon la revendication 1, la première unité à topologie inverseuse (201) est une unité à topologie inverseuse à trois niveaux de type T (201) et comporte un premier transistor de commutation (Q101) et un deuxième transistor de commutation (Q102) connectés en série et présentant un même sens de conduction, et la deuxième branche de roue libre : la deuxième branche de roue libre comportant un septième transistor de commutation (Q107) et un huitième transistor de commutation (Q108) connectés en série et présentant des sens de conduction opposés ; le premier transistor de commutation (Q101) et la première diode (D101) étant connectés en série sur une première branche, le deuxième transistor de commutation (Q102) et la deuxième diode (D102) étant connectés en série sur une deuxième branche, une première extrémité de la première branche étant connectée à l'extrémité de sortie positive de l'alimentation électrique en courant continu (204), une deuxième extrémité de la première branche étant connectée à une première extrémité de la deuxième branche, et une deuxième extrémité de la deuxième branche étant connectée à l'extrémité de sortie négative de l'alimentation électrique en courant continu (204) ; un sens de conduction du premier transistor de commutation (Q101) et de la première diode (D101) faisant circuler un courant de la première extrémité de la première branche à la deuxième extrémité et un sens de conduction du deuxième transistor de commutation (Q102) et de la deuxième diode (D102) faisant circuler un courant de la première extrémité de la deuxième branche à la deuxième extrémité ; un circuit série formé du septième transistor de commutation (Q107) et du huitième transistor de commutation (Q108) étant connecté entre un noeud commun de la première unité de stockage d'énergie (C11) et de la deuxième unité de stockage d'énergie (C12) et la deuxième extrémité de la première branche ; et la deuxième extrémité de la première branche étant une extrémité de sortie en courant alternatif ; et
la deuxième unité à topologie inverseuse (202) est une unité à topologie inverseuse à trois niveaux de type T (202) et comporte un neuvième transistor de commutation (Q109) et un dixième transistor de commutation (Q110) connectés en série et présentant un même sens de conduction, et une troisième branche de roue libre : la troisième branche de roue libre comportant un onzième transistor de commutation (Q111) et un douzième transistor de commutation (Q112) connectés en série et présentant des sens de conduction opposés ; et le onzième transistor de commutation (Q111) et le douzième transistor de commutation (Q112) étant connectés en série entre le noeud commun de la première unité de stockage d'énergie (C11) et de la deuxième unité de stockage d'énergie (C12) et un noeud commun du neuvième transistor de commutation (Q109) et du dixième transistor de commutation (Q110), un sens de conduction du onzième transistor de commutation (Q111) faisant circuler un courant du noeud commun de la première unité de stockage d'énergie (C11) et de la deuxième unité de stockage d'énergie (C12) au noeud commun du neuvième transistor de commutation (Q109) et du dixième transistor de commutation (Q110), et un sens de conduction du douzième transistor de commutation (Q112) faisant circuler un courant du noeud commun du neuvième transistor de commutation (Q109) et du dixième transistor de commutation (Q110) au noeud commun de la première unité de stockage d'énergie (C11) et de la deuxième unité de stockage d'énergie (C12).

3. Onduleur selon la revendication 2, l'onduleur posséde un premier mode de fonctionnement et un deuxième mode de fonctionnement ; et, dans le premier mode de fonctionnement, ni le premier circuit élévateur de tension en courant continu (203), ni le deuxième circuit élévateur de tension en courant continu (205) fonctionne, et l'onduleur fonctionne selon une première modalité, une deuxième modalité, une troisième modalité ou une quatrième modalité : lorsque l'onduleur fonctionne selon la première modalité, seuls le premier transistor de commutation (Q101) et le neuvième transistor de commutation (Q109) de l'onduleur étant dans un état de fonctionnement ; lorsque l'onduleur fonctionne selon la deuxième modalité, seuls le septième transistor de commutation (Q107) et le onzième transistor de commutation (Q111) de l'onduleur étant dans un état de fonctionnement; lorsque l'onduleur fonctionne selon la troisième modalité, seuls le deuxième transistor de commutation (Q102) et le dixième transistor de commutation (Q110) de l'onduleur étant dans un état de fonctionnement ; et lorsque l'onduleur fonctionne selon la quatrième modalité, seuls le huitième transistor de commutation (Q108) et le douzième transistor de commutation (Q112) de l'onduleur étant dans un état de fonctionnement.

4. Onduleur selon la revendication 3, lorsque l'onduleur se trouve dans le deuxième mode de fonctionnement, l'onduleur fonctionne selon la première modalité, la deuxième modalité, la troisième modalité, la quatrième modalité, une cinquième modalité ou une sixième modalité : lorsque l'onduleur fonctionne selon la première modalité, seuls le premier circuit élévateur de tension en courant continu (203) et le neuvième transistor de commutation (Q109) de l'onduleur étant dans un état de fonctionnement ; lorsque l'onduleur fonctionne selon la deuxième modalité, seul le premier transistor de commutation (Q101) de l'onduleur étant dans un état de fonctionnement ; lorsque l'onduleur fonctionne selon la troisième modalité, seuls le septième transistor de commutation (Q107) et le onzième transistor de commutation (Q111) de l'onduleur étant dans un état de fonctionnement; lorsque l'onduleur fonctionne selon la quatrième modalité, seuls le deuxième circuit élévateur de tension en courant continu (205) et le dixième transistor de commutation (Q110) de l'onduleur étant dans un état de fonctionnement ; lorsque l'onduleur fonctionne selon la cinquième modalité, seul le deuxième transistor de commutation de l'onduleur étant dans un état de fonctionnement ; et lorsque l'onduleur fonctionne selon la sixième modalité, seuls le huitième transistor de commutation (Q108) et le douzième transistor de commutation (Q112) de l'onduleur étant dans un état de fonctionnement.

5. Onduleur triphasé, l'onduleur triphasé comprenant trois onduleurs monophasés présentant une même structure, et chaque onduleur monophasé étant l'onduleur monophasé selon l'une quelconque des revendications 1 à 4 ; et
une extrémité de sortie en courant alternatif de chaque onduleur monophasé servant d'extrémité de sortie en courant alternatif triphasé de l'onduleur triphasé.
